# EUROPÄISCHE PATENTSCHRIFT

(11) **EP 3 429 440 B1**
(45) Veröffentlichungstag und Bekanntmachung des Hinweises auf die Patenterteilung: **06.05.2020**
(21) Anmeldenummer: 17712737.0
(22) Anmeldetag: 19.03.2017
(51) Int. Cl.: A47J 31/40, A23L 2/39

(54) **VORRICHTUNG ZUR ZUBEREITUNG EINES GETRÄNKS DURCH MISCHEN EINES FLÜSSIGKEITSLÖSLICHEN MEDIUMS MIT EINER FLÜSSIGKEIT**
DEVICE FOR PREPARING A BEVERAGE BY MIXING A LIQUID-SOLUBLE MEDIUM WITH A LIQUID
DISPOSITIF DE PRÉPARATION D'UNE BOISSON PAR MÉLANGE D'UN MILIEU SOLUBLE DANS UN LIQUIDE AVEC UN LIQUIDE

(30) Priorität: 18.03.2016 DE 102016003271
(43) Veröffentlichungstag der Anmeldung: 23.01.2019
(73) Patentinhaber: CWA GmbH, 20537 Hamburg (DE)
(72) Erfinder: WARNECKE, Christoph, 20537 Hamburg (DE)
(74) Vertreter: Heinemeyer, Karsten
(86) Internationale Anmeldenummer: PCT/EP2017/056470
(87) Internationale Veröffentlichungsnummer: WO 2017/158198

(56) Entgegenhaltungen:
- EP-A1- 2 022 379
- WO-A1-2011/157759
- DE-U1-202007 008 815

## Beschreibung

Die Erfindung betrifft eine Vorrichtung zur Herstellung eines Getränks durch Mischen eines flüssigkeitslöslichen Mediums mit einer Flüssigkeit. Die Vorrichtung verfügt über eine Portioniereinheit, die mit einem für die Lagerung des Mediums vorgesehenen Vorratsbehälter verbunden ist und die einem Vormischer eine portionierte Menge des flüssigkeitslöslichen Mediums aus dem Vorratsbehälter zuführt. Im Vormischer wird das Medium mit Luft, Dampf- und/oder einem Gas gemischt und mit einem Luft-, Dampf- und/oder Gasstrom zu einer Hauptmischkammer transportiert. In der Hauptmischkammer wird das Medium mit der Flüssigkeit gemischt und schließlich einem Getränkeauslass zugeführt, über den das aus der Flüssigkeit und dem flüssigkeitslöslichen Medium hergestellte Getränk ausgegeben wird.

Allgemein sind Geräte und Automaten bekannt, mit denen aus Wasser oder Milch und einem Pulver ein Getränk hergestellt wird. Derartige Automaten dienen vielfach der Zubereitung von Heißgetränken, wie etwa Kaffee, Kakao oder Milchmixgetränken, wobei durch Mischen von heißem Wasser, Wasserdampf oder Milch mit einem Kaffee- oder Kakaopulver das gewünschte Getränk zubereitet wird.

In diesem Zusammenhang beschreibt beispielsweise die DE 10 2004 033 657 A1 eine Vorrichtung zum Herstellen eines Getränkes aus Wasser und wasserlöslichen Produkten, wie beispielsweise Kaffee-, Milch- oder Kakaopulver. Über zwei unterschiedliche Strömungswege werden einer Mischkammer einerseits ein Luftstrom mit dem gewünschten Pulver und andererseits ein Wasserstrom zugeführt. Innerhalb der Mischkammer ist eine Prallplatte vorgesehen, auf die der Flüssigkeitsstrom auftritt, wobei auf diese Weise sowohl eine üblicherweise beim Mischen von Pulver und Flüssigkeit auftretende Freisetzung von Produktstaub als auch eine Anlagerung des Produktstaubes in diesem Bereich verhindert werden soll. Die Gefahr der Bildung entsprechender Anlagerungen besteht insbesondere in Anlagenbereichen, die nicht oder nur in geringem Maße flüssigkeitsdurchströmt sind. Indem der Wasserstrahl als Vorhang oder Schleier entlang von Bauteilen geführt wird, an denen üblicherweise die Gefahr von Produktablagerungen besteht, soll die beschriebene technische Lösung Feststoffanlagerungen verhindern.

Insgesamt stellt es bei den bekannten Geräten, in denen Flüssigkeiten, insbesondere Milch oder Wasser, mit Pulver zum Zwecke der Herstellung eines Getränkes gemischt werden, regelmäßig ein Problem dar, dass es zu ungewollten Ablagerungen des verwendeten Pulvers kommt. Diese Ablagerungen treten regelmäßig in Bereichen auf, die nicht oder nur geringfügig von der verwendeten Flüssigkeit durchströmt werden und die in vielen Fällen schwer zugänglich sind. Problematisch an derartigen Ablagerungen, die während des Betriebs der Maschinen, insbesondere der Maschinen zur Kaffee- und/oder Kakaoherstellung, stetig wachsen, sind zum einen die hieraus resultierenden Funktionsstörungen und Verkeimungen. Andererseits führen solche Ablagerungen in Maschinen zur Getränkezubereitung vielfach zu erheblichen Geschmacksbeeinflussungen, sodass die Maschinen zumindest nur noch unter erheblichen Qualitätseinbußen für die Getränkezubereitung zu verwende sind. In vielen Fällen kann nicht einmal eine Bereitstellung von heißem Wasser, etwa für die Teezubereitung, die den Ansprüchen der Nutzer entspricht, sichergestellt werden.

Die Wartung und Reinhaltung der beschriebenen, gattungsgemäßen Geräte zur Zubereitung von Getränken hat somit erhebliche Bedeutung und muss in regelmäßigen Abständen durchgeführt werden, wobei der Zeitaufwand hierfür oftmals vergleichsweise groß ist. Werden derartige Wartungen nicht in den vorgeschriebenen Abständen oder nicht ordnungsgemäß durchgeführt, kann es schon nach verhältnismäßig kurzen Betriebszeiten entsprechender Geräte zu Ausfallzeiten kommen.

Ausgehend von den aus dem Stand der Technik bekannten Geräten und Automaten zur Zubereitung von Getränken durch Mischen einer Flüssigkeit mit pulver-, granulat- oder staubförmigen Medien liegt der Erfindung die Aufgabe zu Grunde, eine derartige Vorrichtung weiterzubilden, sodass auch bei großen Betriebsintervallen Ablagerungen oder Anbackungen des zum Mischen benötigten festen Mediums weitgehend vermieden werden. Hierbei soll die konstruktive Gestaltung derart ausgeführt sein, dass eine Führung, insbesondere des Feststoffes, ohne besondere Umlenkungen und das Vorsehen von Toträumen realisierbar ist. Insgesamt soll der Aufbau der anzugebenden Vorrichtung vergleichsweise einfach sein, vor allem eine einfache und schnelle Reinigung des Gesamtsystems ermöglichen. Auf bevorzugte Weise soll es ferner möglich sein, den für die Herstellung des Getränkes benötigten pulverförmigen Feststoff auch über längere Strecken zu transportieren, ohne dass die Gefahr der Entstehung von Ablagerungen in der Vorrichtung besteht. Durch eine entsprechende technische Ausführung soll sichergestellt werden, dass der für die Herstellung eines Mischgetränkes benötigte, pulverförmige Feststoff nicht unmittelbar an der Stelle gelagert bzw. bevorratet werden muss, an der auch die Getränkeausgabe erfolgt. Auf diese Weise soll es möglich sein, auch größere Vorräte des pulverförmigen Feststoffes zentral zu bevorraten und gleichzeitig eine dezentrale Aufstellung wenigstens eines Geräts, an dem die Ausgabe des Getränkes erfolgt, zu realisieren.

Die vorstehende, geschilderte Aufgabe wird mit einer Vorrichtung gemäß Anspruch 1 gelöst. Eine Anordnung, bei der eine erfindungsgemäß ausgeführte Vorrichtung aus wenigstens zwei Vorratsbehältern mit einem pulver-, granulat-, oder staubförmigem Medium versorgt wird, ist in Anspruch 14 angegeben. Darüber hinaus bezieht sich die Erfindung auf die im Anspruch 15 angegebene spezielle Verwendung. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft eine Vorrichtung zur Herstellung eines Getränkes durch Mischen eines flüssigkeitslöslichen Mediums und einer Flüssigkeit, wobei eine Portioniereinheit vorgesehen ist, die mit einem Vorratsbehälter zur Lagerung des Mediums verbunden ist und die einem Vormischer eine portionierte Menge des flüssigkeitslöslichen Mediums aus dem Vorratsbehälter zuführt. Das Medium wird in einem Vormischer mit Luft, Dampf oder einem Gas gemischt und daraufhin mit einem Luft-, Dampf- und/oder Gasstrom zu einer Hauptmischkammer transportiert, in der das Medium mit der Flüssigkeit gemischt wird. Weiterhin verfügt die Vorrichtung über einen Getränkeauslass, über den das aus der Flüssigkeit und dem flüssigkeitslöslichen Medium zubereitete Getränk ausgegeben wird. Erfindungsgemäß ist die Vorrichtung derart weitergebildet worden, dass der Vormischer einen Einlass für den Luft-, Dampf- und/oder Gasstrom und eine in Strömungsrichtung dem Einlass nachgeschaltete Düseneinheit aufweist, über die der Luft-, Dampf- und/oder Gasstrom wenigstens zeitweise beschleunigt und derart durch den Vormischer geleitet wird, dass die Portion des Mediums durch den Luft-, Dampf- und/oder Gasstrom aus einem Zulauf mitgerissen und das Medium mit dem Luft-, Dampf- und/oder Gasstrom zur Hauptmischkammer gefördert wird. Die erfindungsgemäße technische Lösung zeichnet sich somit insbesondere dadurch aus, dass wenigstens eine Düseneinheit vorgesehen ist, über die einem Vormischer eine vorportionierte Menge des Mediums aus einem Zulauf zugeführt wird, wobei auf vorteilhafte Weise ausgenutzt wird, dass das vorportionierte Medium aufgrund des sich in der Düse, bedingt durch eine Verengung des Strömungsquerschnitts, einstellenden Unterdruckes mitgerissen wird und dass es im Ausgangsbereich der Düse zu einer Verwirbelung kommt, die eine gleichmäßige Verteilung des Mediums im Förderstrom bewirkt. Der anschließende Transport des flüssigkeitslöslichen Mediums, insbesondere eines pulver-, granulat- oder staubförmigen Feststoffes, zur Hauptmischkammer erfolgt dann mit Hilfe des als Luft-, Dampf und/oder Gasstrom ausgeführten Förderstroms.

Durch den Einsatz einer Düseneinheit im Bereich des Vormischers wird sichergestellt, dass sowohl die aus dem Vorratsbehälter entnommene Portion des benötigten Mediums rückstandslos aus dem Zulauf entfernt wird als auch dass das Medium derart im Förderstrom, der aus Luft, Dampf oder Gas gebildet wird, verteilt wird, dass es weder im Vormischer noch den nachgeordneten Rohr- oder Schlauchleitungen zu Ablagerungen des Mediums kommt. Somit wird durch den Einsatz eines luft-, dampf- und/oder gasförmigen Förderstroms, der durch das Vorsehen einer Düse zumindest kurzzeitig unter Ausbildung eines Unterdrucks in diesem Bereich beschleunigt wird, eine ganz besonders geeignete Förderung eines pulverförmigen Mediums ermöglicht. In diesem Zusammenhang ist es denkbar, dass die Zeitspanne, in der der Förderstrom durch den Vormischer geleitet wird, etwas länger ist, als es notwendig wäre, um eine Portion des Mediums vollständig aus dem Zulauf mitzureißen. Durch die zeitlich verlängerte Durchleitung des Förderstroms durch den Vormischer wird auf bevorzugte Weise das Risiko, dass es zu Ablagerungen im Vormischer oder den nachgeordneten Rohr- oder Schlauchleitungen kommt, weiter minimiert.

Gemäß einer besonderen Ausführungsform der Erfindung handelt es sich bei der im Vormischer eingesetzten Düseneinheit um eine Venturidüse. Wesentliches technisches Merkmal ist hierbei, dass durch eine gezielte Querschnittsveränderungen des Strömungsweges, durch den Luft, Dampf und/oder Gas strömt, die Strömungsgeschwindigkeit des Förderstroms erhöht wird, sodass es in diesem Bereich zu einer Druckabsenkung kommt. Die Druckabsenkung wird genutzt, um die Portion des aus der Portioniereinheit über den Zulauf in den Vormischer einströmenden Mediums vollständig mitzureißen, sodass weder im Zulauf noch in einem Bereich zwischen dem Zulauf und der stromaufwärts gelegenen Portioniereinheit Medium zurückbleibt. Die Erweiterung des Strömungsquerschnittes unmittelbar hinter der Düseneinheit führt wiederum zu einer Verringerung der Strömungsgeschwindigkeit und einer entsprechenden Druckerhöhung. In diesem Bereich einer Querschnittserweiterung findet regelmäßig eine zumindest leichte Wirbelbildung statt, die eine gleichmäßige Verteilung des aus dem Zulauf mitgerissenen Mediums im Förderstrom begünstigt. Durch das Vorsehen einer Düseneinheit im Mischer wird somit einerseits sichergestellt, dass das Medium vollständig aus dem Zulauf und dem stromaufwärts gelegenen Bereich in den Förderstrom mitgerissen wird und andererseits dass eine gleichmäßige und vollständige Vermischung des Mediums im Förderstrom erfolgt, sodass auch im stromabwärts der Düseneinheit gelegenen Bereich Ablagerungen des Mediums, insbesondere in den hier vorgesehenen Rohren und/oder Schlauchleitungen, zuverlässig vermieden werden.

In einer speziellen Weiterbildung der Erfindung ist zwischen dem Vormischer und der Hauptmischkammer eine Transportstrecke vorgesehen, die eine gleichmäßige Verteilung des Mediums innerhalb des Förderstroms weiter begünstigt, sodass schließlich ein Luft-, Dampf- und/oder Gasstrom mit einer nahezu gleichmäßigen Mediumverteilung in die Hauptmischkammer eingebracht werden kann. In diesem Zusammenhang ist es sogar denkbar, dass die Portioniereinheit mit dem erfindungsgemäß ausgeführten Vormischer räumlich beabstandet von der Hauptmischkammer und den stromabwärts der Hauptmischkammer vorgesehenen Bauteilen angeordnet ist. So können durchaus mehrere Meter zwischen dem Auslass der Vormischkammer und dem Mediumeinlass der Hauptmischkammer, beispielsweise mit Hilfe von Rohr- oder Schlauchleitungen, überbrückt werden.

Auf bevorzugte Weise verfügt die Hauptmischkammer über einen Flüssigkeitseinlass, durch den ein Flüssigkeitsstrom einströmt, über einen Mediumeinlass, durch den der mediumbeladene Luft-, Dampf- und/oder Gasstrom einströmt und über einen Hauptmischkammerauslass, durch den die mit dem flüssigkeitslöslichen Medium angereicherte Flüssigkeit ausströmt. Innerhalb der Mischkammer wird die eintretende Flüssigkeit mit dem mediumbeladenen Förderstrom gemischt, wobei sich das Medium in der Flüssigkeit löst. Um eine effektive Mischung der Flüssigkeit und des Mediums sicherzustellen, wird die Flüssigkeit innerhalb der Hauptmischkammer derart bewegt, dass es zu einer guten Durchmischung mit dem Medium kommt.

Vorzugsweise ist zumindest ein Leitelement vorgesehen, auf das der Flüssigkeitsstrom wenigstens teilweise auftrifft und hierbei derart umgelenkt wird, dass der Flüssigkeitsstrom auf einer Strecke zwischen dem Flüssigkeitseinlass und dem Hauptmischkammerauslass in eine vorgegebene Richtung gelenkt wird. In diesem Zusammenhang ist es sowohl denkbar, dass die Strömung derart umgelenkt wird, dass der Fluidstrom auf kürzestem Weg durch die Hauptmischkammer geleitet oder zur Eindüsungsstelle des fluidlöslichen Mediums geführt wird als auch, dass die Strömung wenigstens teilweise eine radiale Strömungsform annimmt. Unter radialer Strömungsform wird in diesem Zusammenhang verstanden, dass die Flüssigkeit zumindest abschnittsweise schrauben-, kreis- oder ellipsenförmig eine Haupterstreckungsachse oder Mittellinie der Hauptmischkammer umströmt und schließlich in den Hauptmischkammerauslass einströmt. Bevorzugt wird dies erreicht, indem das Leitelement, bspw. eine Wand der Hauptmischkammer und/oder ein in der Hauptmischkammer angeordneter Einsatz, eine Oberfläche mit einer geeigneten Kontur, etwa in Form einer Schraube, aufweist. Ferner ist es denkbar, dass das Leitelement wenigstens durch eine Wand der Hauptmischkammer und einen in der Hauptmischkammer angeordneten Einsatz gebildet wird, zwischen denen sich ein Spalt befindet, durch den die Fluidströmung durch die Hauptmischkammer, insbesondere zum Eindüsungspunkt für das flüssigkeitslösliche Medium, geführt wird.

Gemäß einer besonders geeigneten Ausführungsform der Erfindung tritt das Fluid in die Hauptmischkammer ein und strömt entlang der Innenwände zum Eindüsungspunkt oder Eindüsungsbereich, in dem eine Mischung mit dem flüssigkeitslöslichen Medium erfolgt. Das Fluid strömt in diesem Fall auf bevorzugte Weise entlang der Wand der Hauptmischkammer und parallel zur Wandoberfläche auf kürzestem Weg in Richtung des Hauptmischkammerauslasses. Das Fluid strömt quasi zumindest annähernd linear entlang der Hauptbewegungsrichtung. Eine Rotation der Strömung ist gemäß dieser Ausgestaltung der Erfindung zumindest nahezu ausgeschlossen.

Wesentlich für die Gestaltung der Hauptmischkammer ist, dass mit der Strömung eine Art Wassertunnel erzeugt wird, wobei zumindest ein Großteil der Flüssigkeit entlang der Kammeraußenwand strömt, während sich im Inneren der Hauptmischkammer zumindest nahezu keine Flüssigkeit befindet. Dies kann durch das Vorsehen eines Einsatzes innerhalb der Hauptmischkammer begünstigt werden. Auf diese Weise wird der innenliegende Bereich der Mischkammer, durch den das mit einem Luft-, Dampf- und/oder Gasstrom geförderte flüssigkeitslösliche Medium in die Hauptmischkammer geleitet wird, weitgehend von Flüssigkeit frei gehalten. Auf bevorzugte Weise strömt das mit einem Luft-, Dampf- und/oder Gasstrom geförderte flüssigkeitslösliche Medium durch einen Strömungskanal, der im Inneren eines in der Hauptmischkammer angeordneten Einsatzes vorgesehen ist in die Hauptmischkammer ein. Schließlich tritt das flüssigkeitslösliche Medium über einen Eindüsungspunkt oder Eindüsungsbereich in die Hauptmischkammer ein Das flüssigkeitslösliche Medium wird in die Strömung, die bevorzugt die Form eines Flüssigkeitstunnels annimmt, eingedüst bzw. eingeblasen und aufgrund der Strömung der Flüssigkeit innerhalb der Mischkammer kommt es zu einer effektiven Mischung. Gleichfalls wird aufgrund der speziellen Strömungsform in der Hauptmischkammer sichergestellt, dass es nicht zu ungewünschten Feststoffablagerungen innerhalb der Hauptmischkammer kommt.

Eine entsprechend geeignete Strömungsform, insbesondere in Form eines Flüssigkeitstunnels, wird vorzugsweise mit Hilfe eines geeignet ausgebildeten Leitelements erzeugt, das die Flüssigkeit in eine entsprechende, radiale Strömung versetzt. Gemäß einer speziellen Ausführungsform der Erfindung wird das Leitelement zumindest teilweise durch eine Innenwand der Hauptmischkammer gebildet. Bevorzugt weist in diesem Fall eine Innenwand der Hauptmischkammer eine zylinderförmige, konische oder schraubenförmige Kontur auf. Es ist somit denkbar, dass das Leitelement eine entsprechende geometrische Kontur aufweist oder eine Innenwand der Hauptmischkammer bzw. ein Einsatz der Hauptmischkammer entsprechend konturiert ist. Wesentlich ist jeweils, dass die in die Hauptmischkammer einströmenden Flüssigkeit entlang der konturierten Oberfläche strömt und mit Hilfe des Leitelements zum Hauptmischkammerauslass geführt wird. Unabhängig vom Vorhandensein oder der Gestaltung des Leitelements ist der Flüssigkeitseinlass auf bevorzugte Weise asymmetrisch in Bezug auf eine Mittelachse der Hauptmischkammer angeordnet, sodass bereits bei Einlass der Flüssigkeit eine radiale Umströmung des Innenraums der Hauptmischkammer initiiert wird.

In einer weiteren besonderen Ausgestaltung der Erfindung ist vorgesehen, dass als Leitelement oder als Teil des Leitelements ein auf geeignete Weise geformtes Bauteil im Inneren der Hauptmischkammer vorgesehen ist. In diesem Zusammenhang ist es denkbar, dass innerhalb der Hauptmischkammer ein Strömungskanal geschaffen wird, der sich zwischen einer äußeren Innenwand der Mischkammer und dem weiteren Bauteil zumindest abschnittsweise vom Flüssigkeitseinlass bis zum Hauptmischkammerauslass erstreckt. Auf vorteilhafte Weise ist es beispielsweise denkbar, dass die Mischkammerwand zylinderförmig, konisch oder schraubenförmig ausgeführt ist und sich im Inneren der Mischkammer ein zylinderförmig, schraubenförmig oder konisch ausgeführtes Bauteil befindet, wobei die Mischkammerwand und das Innenteil derart zueinander angeordnet sind, dass zwischen der Mischkammerwand und dem innenliegenden Bauteil ein Spalt gebildet wird, durch den die in die Mischkammer eintretende Flüssigkeit gezielt zum Mischkammerauslass geleitet wird.

Gemäß einer weiteren besonderen Ausführungsform der Erfindung verfügt die Portioniereinheit, die dem Vormischer aus dem Vorratsbehälter eine portionierte, einstellbare Menge des flüssigkeitslöslichen Mediums zuführt über eine Fördereinheit, die einen Propeller, ein Zahnrad, ein Schaufelrad, ein Flügelrad und/oder eine Förderschnecke aufweist. Vorzugsweise ist die Fördereinheit derart ausgeführt, dass ein für die Förderung des Mediums vorgesehenes Funktionsbauteil, wie etwa ein Zahnrad, wenigstens einen Förderraum, etwa zwischen zwei benachbarten Zähnen eines Zahnrades, aufweist, der eine definierte Menge des Mediums aufnimmt und bei einer Bewegung des Funktionsbauteils transportiert. Wird der Förderraum mit Medium gefüllt, findet hierdurch bereits eine gewisse Vorportionierung statt. Auf geeignete Weise wird die Fördereinheit bevorzugt elektromotorisch angetrieben. Alternativ ist es denkbar, dass diese pneumatisch und/oder hydraulisch angetrieben wird.

Im Weiteren verfügt die Portioniereinheit vorzugsweise über eine Portionierhilfe, die in einer ersten Betriebssituation derart mit der Fördereinheit zusammenwirkt, dass wenigstens zeitweise zumindest eine Portion mit vorgegebener Menge des aus dem Vorratsbehälter entnommenen Mediums zwischen Fördereinheit und Portionierhilfe in einem Förderraum eingeschlossen ist und in einer zweiten Betriebssituation die Portion mit der vorgegebenen Menge des Mediums aus diesem Förderraum in den Zulauf des Vormischers geleitet wird. Zwischen den beiden Betriebssituationen findet jeweils eine gesteuerte Bewegung der Fördereinheit, insbesondere eines Funktionsbauteils in Form eines Propellers, eines Zahnrades, eines Schaufelrades, eines Flügelrades und/oder einer Förderschnecke statt. Ganz besonders bevorzugt ist die Portionierhilfe in Form einer Blende ausgeführt, die derart angeordnet und ausgeführt ist, dass stets gewährleistet ist, dass keine offene Verbindung zwischen dem Vorratsbehälter und dem Zulauf zum Vormischer besteht. Hierzu ist die Portionierhilfe einerseits derart ausgeführt und angeordnet, dass bei einer Bewegung des Funktionsbauteils der Fördereinheit wenigstens ein Förderraum der Fördereinheit mit Medium aus dem Vorratsbehälter gefüllt wird und dass andererseits nur eine Portion mit vorgegebener Menge aus einem anderen Förderraum in den Zulauf des Vormischers gelangt. Trotz der Bewegung des Funktionsbauteils, beispielsweise der Drehung eines Zahnrades, wird somit stets nur eine vorgegebene, portionierte Menge des Mediums in den Zulauf des Vormischers gefördert und gleichzeitig sichergestellt, dass keine durchgängige Verbindung zwischen dem Vorratsbehälter und dem Zulauf des Vormischers geschaffen wird. Soll ein Getränk zubereitet werden, wird das Funktionsbauteil der Fördereinheit bewegt, sodass eine portionierte Menge des Mediums aus einem ersten Förderraum in den Zulauf des Vormischers gelangt. Gleichzeitig wird ein zweiter Förderraum mit Medium aus dem Vorratsbehälter gefüllt. Sobald der erste Förderraum entleert und der zweite Förderraum gefüllt ist, wird die Bewegung des Funktionsbauteiles der Fördereinheit gestoppt, zumindest bis ein weiteres Getränk zubereitet werden soll.

Ausgehend von dem Vorgesagten ist die Portioniereinheit gemäß einer bevorzugten Gestaltungsform derart angeordnet und ausgeführt, dass ein Förderraum zumindest zeitweise, insbesondere während eine Verbindung zwischen dem Förderraum und dem Zulauf des Vormischers existiert, sowohl von dem Funktionsbauteil, beispielsweise den benachbarten Zähnen eines Zahnrades, und der Portionierhilfe, etwa einer Blende, begrenzt wird.

Im Übrigen kann die Erfindung durch Vorsehen eines Rührelements, das wenigstens zeitweise innerhalb des Vorratsbehälters bewegt wird, weitergebildet werden. Auf vorteilhafte Weise ist vorgesehen, dass das Rührelement mit der Portioniereinheit in Wirkverbindung steht, insbesondere auch dann zumindest zeitweise bewegt wird, wenn das Funktionsbauteil der Fördereinheit eine Bewegung ausführt.

Gemäß einer ganz besonderen Gestaltung der Erfindung ist daher vorgesehen, dass die Portioniereinheit ein bewegbar angeordnetes Rührelement aufweist, das in montiertem Zustand des Vorratsbehälters auf einer dem Vorratsbehälter zugewandten Seite der Portioniereinheit das Medium berührt. Durch ein derartiges Rührelement, das ebenfalls elektromotorisch angetrieben ist und gemäß einer speziellen Weiterbildung der Erfindung an die Bewegung der Fördereinheit gekoppelt ist, wird das im Vorratsbehälter befindliche Medium zumindest zeit- und/oder teilweise bewegt, sodass ein Verklumpen sowie eine Trichterbildung im Vorratsbehälter verhindert wird.

Ein derartiges Rührelement kann auf bevorzugte Weise ein Gelenk aufweisen oder ist gelenkig an die Portioniereinheit angebunden, sodass beispielsweise bei der Montage eines Vorratsbehälters an die Portioniereinheit das Rührelement derart bewegt wird, dass ein leichtes Einführen des Rührelementes in den Vorratsbehälter ermöglicht wird.

Gemäß einer ganz besonders vorteilhaften Weiterbildung der Erfindung verfügt das Rührelement über einen Strömungskanal durch den zumindest zeitweise Luft in den Vorratsbehälter eingedüst wird, um für eine weitere Auflockerung des bevorrateten Mediums zu sorgen. Vorzugsweise befindet sich der Strömungskanal im Inneren des Rührelements, wobei dieses bevorzugt zumindest abschnittsweise hohl ausgeführt ist. Durch eine entsprechende Ausführung ist es bevorzugt möglich, Druckluft durch das Rührelement in den Vorratsbehälter zu leiten, und so eine Auflockerung des vorzugsweise pulverförmigen Mediums zu bewirken bzw. einer Verklumpung entgegen zu wirken.

Gemäß einer weiteren besonderen Ausführungsform der Erfindung verfügt die Portioniereinheit, die vorzugsweise in Form eines Adapters ausgebildet ist, über wenigstens ein Befestigungsmittel, mit dem diese lösbar fest und insbesondere zerstörungsfrei lösbar mit einem Vorratsbehälter verbindbar ist. Bei einem derartigen Befestigungsmittel kann es sich sowohl um ein Gewinde oder einen andersartig ausgebildeten Schnapp- oder Rastmechanismus handeln. Gemäß einer ganz speziellen Weiterbildung ist ein Schnappmechanismus vorgesehen, der auf einem Außenumfang der Portioniereinheit geeignet ausgebildete Erhebungen, die beispielsweise halbkugelförmig ausgebildet sein können, aufweist, sodass die Portioniereinheit bei Bedarf auf einen geöffneten Vorratsbehälter, der in geschlossenem Zustand mit einem Gewindedeckel verschlossen ist, aufgeschoben und mit Hilfe eines derartigen Klickmechanismus befestigt wird.

Im Weiteren ist die Portioniereinheit auf bevorzugte Weise auf der dem Vorratsbehälter zugewandten Seite kreisförmig ausgebildet und kann auf einfache Weise auf einem Vorratsbehälter, in dem das Medium bevorratet wird, befestigt, insbesondere auf ein Gewinde eines Behälters aufgeschraubt werden. Auf die Weise ist es möglich, die Portioniereinheit beispielsweise auf einen am Boden stehenden Vorratsbehälter aufzuschrauben bzw. diese auf geeignete Weise an diesem zu befestigen und die Portioniereinheit erst in auf dem Vorratsbehälter befestigten Zustand mit dem Vormischer bzw. der übrigen Vorrichtung zur Erzeugung eines Getränkes zu verbinden. Dies bietet vor allem den Vorteil, dass nach Befestigung der Portioniereinheit der Vorratsbehälter verschlossen ist und auch während der Befestigung der Portioniereinheit und des Vorratsbehälters am Vormischer bzw. an der Vorrichtung zur Herstellung eines Getränkes kein Medium aus dem Vorratsbehälter austreten kann. Erst nach einer geeigneten Bewegung einer Fördereinrichtung, insbesondere eines Funktionsbauteils der Fördereinrichtung, wie etwa eines Propellers, eines Zahnrades, eines Schaufelrades, eines Flügelrades und/oder einer Förderschnecke, innerhalb der Portioniereinheit, wird eine Durchgangsöffnung freigegeben und eine portionierte Menge des im Vorratsbehälter vorgesehenen Mediums in den Zulauf des Vormischers geleitet.

Gemäß einer weiteren Ausführungsform der Erfindung ist vorgesehen, dass in Strömungsrichtung zwischen der Hauptmischkammer und dem Getränkeauslass, über den das Getränk ausgegeben wird, ein Aufschäumer vorgesehen ist. Vielfach ist gewünscht, dass ein Getränk, das einem Getränkeautomaten entnommen wird, eine schaumige oder cremige Konsistenz aufweist oder zumindest in einem oberen Bereich bis zur Oberfläche eine Schaumschicht aufweist. Wesentlich bei der Herstellung von Getränken mit einer schaumigen Konsistenz, die regelmäßig auch als Shakes bezeichnet werden, ist, dass die Dichte des Getränks gegenüber einem Getränk, das ausschließlich eine Flüssigphase aufweist, herabgesetzt ist. Um einem Getränk eine zumindest teilweise schaumige oder cremige Konsistenz zu verleihen, wird Luft und/oder Dampf, insbesondere in erhitzter Form, in die Flüssigkeit eingedüst, die Flüssigkeit verwirbelt oder aber das in der Flüssigkeit enthaltene bzw. gelöste Eiweiß aufgeschlagen. In einem speziellen Einsatzgebiet der Erfindung werden Fitnessgetränke zubereitet, wobei eine durchschnittliche Getränkeportion 0,3 bis 0,4 I Flüssigkeit und etwa 30 g Eiweiß enthält. Um eine schaumige oder cremige Konsistenz zu gewährleisten, wird das Getränk mit dem darin enthaltenen Eiweiß mit Hilfe eines geeigneten Rühr- oder Quirlelements aufgeschlagen.

Sofern lediglich auf der Oberfläche eines Getränks eine Schaumschicht erzeugt werden soll, wird Luft und/oder Dampf, insbesondere in erhitzter Form, in die Flüssigkeit eingedüst und die Flüssigkeit mit Hilfe eines Rührelements verwirbelt.

Um die zuvor erläuterte schaumige oder cremige Konsistenz eines Getränkes herstellen zu können, ist gemäß einer speziellen Ausführungsform ein Aufschäumer vorgesehen, der über ein mechanisches Rührwerk, ein Heizelement, eine Düseneinheit und/oder einen Dampfeinlass verfügen kann. Die die Hauptmischkammer verlassende Flüssigkeit mit dem darin gelösten flüssigkeitslöslichen Medium wird somit dem Aufschäumer zugeführt, der die Flüssigkeit zumindest teilweise aufschäumt, bevor diese über den Getränkeauslass, beispielsweise in einen Becher, ausgegeben wird. Sofern der Aufschäumer über ein Rührwerk verfügt, wird dieses bevorzugt mit Hilfe eines elektromotorischen Antriebs angetrieben. Ebenso ist es denkbar, dass der Antrieb des Rührwerks pneumatisch und/oder hydraulisch bewirkt wird.

Eine weitere Ausführungsform der Erfindung sieht vor, dass in Strömungsrichtung zwischen der Hauptmischkammer und dem Getränkeauslass ein Abscheider für Luft, Dampf und/oder Gas vorgesehen ist. Bevorzugt ist ein derartiger Abscheider, der im Folgenden ganz allgemein als Luftabscheider bezeichnet wird, zylindrisch oder insbesondere konisch ausgeführt, sodass die Strömung abermals in eine radiale Strömung umgewandelt wird, wobei der Flüssigkeitsanteil nach unten in Richtung des Getränkeauslasses strömt, während zumindest ein Teil der enthaltenen Luft, des enthaltenen Dampfes und/oder des enthaltenen Gases nach oben entweichen kann. Der Abscheider nutzt somit die Fliehkraft, wobei die Flüssigkeit nach unten strömt, während das leichtere Fluid in Form von Luft-, Dampf- und/oder Gas nach oben entweichen kann. Sofern eine erfindungsgemäß ausgeführte Vorrichtung zur Herstellung eines Mischgetränkes über einen Aufschäumer verfügt, so ist der Luftabscheider auf bevorzugte Weise in Strömungsrichtung zwischen dem Aufschäumer und dem Getränkeauslass angeordnet.

Gemäß einer weiteren besonderen Gestaltungsform der Erfindung ist ein Kühl- und/oder Heizelement vorgesehen, mit dem insbesondere die Flüssigkeit, bevor diese in die Hauptmischkammer einströmt, oder der bereits mit flüssigkeitslöslichem Medium gelöste Flüssigkeitsstrom temperiert wird. Oftmals ist, gerade bei der Herstellung von Mischgetränken im Fitnessbereich, eine zumindest leichte Kühlung eines Getränkes gewünscht. Werden dagegen Heißgetränke, wie etwa Kaffee und/oder Tee mit der erfindungsgemäßen Vorrichtung zubereitet, müssen die Flüssigkeit oder das Getränk vor der Ausgabe in ein Trinkgefäß aufgeheizt werden.

Die Temperierung kann wiederum mit Hilfe eines mit elektrischer Energie versorgten Heizelementes oder Kühlelements, mit Hilfe eines fluiddurchströmten Wärmeübertragers und/oder durch Einführen eines geeignet temperierten Fluids, beispielsweise erhitzter Dampf oder gekühlte Luft, realisiert werden. Ein derartiges Element zur Temperierung eines Getränkes ist vor allem dann sinnvoll einsetzbar, sofern eine Vorrichtung zur Herstellung eines Getränkes aus einer Flüssigkeit und einem flüssigkeitslöslichen Medium zumindest zeitweise, insbesondere bedarfsgesteuert, ein gekühltes Mischgetränk, wie etwa ein Fitnessshake oder ein Milchmixgetränk, oder aber ein Heißgetränk, beispielsweise Kaffee oder Kakao herstellen soll.

In einer abermaligen Weiterbildung der Erfindung ist eine zentrale Steuereinheit vorgesehen, die, sofern ein Getränk zubereitet werden soll, sämtliche hierfür benötigten Komponenten, wie etwa Ventile, Antriebe, Pumpen, Heizelemente und/oder Ventilatoren, bedarfsgerecht ansteuert. In der zentralen Steuereinheit sind hierfür auf bevorzugte Weise Sollwerte hinterlegt, die entweder direkt oder indirekt der Erzeugung eines Steuersignals zugrunde gelegt werden. Indirekt meint in diesem Zusammenhang, dass derartige Sollwerte mit in der Vorrichtung erfassten oder von einem Nutzer vorgegebenen Mess- oder Eingabewerten verglichen und anhand des Vergleichs die benötigte Stellgröße zur Generierung des Steuersignals ermittelt wird. Vorzugsweise ist eine Eingabeeinheit, beispielsweise in Form einer Tastatur oder eines Touch-Screens vorgesehen, sodass ein Nutzer gezielt einen Getränkewünsch über diese Eingabeeinheit eingegeben kann. Ein entsprechendes Eingabesignal wird wiederum an die zentrale Steuereinheit übertragen, die dann auf der Grundlage der Eingabe wenigstens ein Steuersignal erzeugt. Die zentrale Steuereinheit kann wahlweise in die Vorrichtung zur Zubereitung eines Getränkes integriert oder über eine geeignete Schnittstelle, die eine Übertragung von Daten und/oder elektrischer Energie ermöglicht, an die Vorrichtung angebunden sein. Auf ganz besonders bevorzugte Weise ist ferner eine Anzeige, etwa in Form einer grafischen Abbildung auf einem Schaltelement oder auf einem Display, insbesondere einem Touch-Screen vorgesehen, sodass der Nutzer seine Getränkewunsch gezielt eingeben und/oder sogar aus einer Mehrzahl unterschiedlicher Getränke, die zubereitet werden können, auswählen kann. Ebenso ist es denkbar, dass eine Anzeige verwendet wird, um allgemeine Informationen über den Getränkezubereitungsprozess oder Geräteparameter, beispielsweise solche, die im Rahmen einer Wartung und/oder Reparatur benötigt werden, auszugeben. Um entsprechende Informationen und Parameter ausgeben zu können, ist zusätzlich zur zentralen Steuereinheit, der Eingabeeinheit und der Anzeige wenigstens eine bedarfsgerecht konfigurierte Speichereinheit vorgesehen, in der die jeweils benötigten Daten abgelegt sind.

Um eine besonders effektive Reinigung der erfindungsgemäßen Vorrichtung zur Zubereitung eines Mischgetränks zu realisieren, ist vorgesehen, während des Reinigungsprozesses der Hauptmischkammer über den Flüssigkeitseinlass Wasser und über den Mediumeinlass ein Reinigungsmittel, insbesondere eine Reinigungsflüssigkeit, zuzuleiten. Im Inneren der Hauptmischkammer wird während der Reinigung somit Wasser mit Reinigungsmittel gemischt. Diese gemischte Reinigungsflüssigkeit kann über den Hauptmischkammerauslass sämtlichen zu reinigenden Komponenten, insbesondere einem Aufschäumer, einem Temperierelement, einem Fliehkraftabscheider und/oder einem Getränkeauslass, sowie den diese Komponenten verbindenden Rohr oder Schlauchleitungen zugeführt werden. Wesentlich hierbei ist, dass der Hauptmischer wiederum verwendet wird, um eine Flüssigkeit, hier Wasser, mit einem wasserlöslichen Medium, nämlich einem Reinigungsmittel, auf besonders effektive Weise zu mischen.

Im Weiteren betrifft die Erfindung eine Anordnung zur Erzeugung von Getränken durch Mischen eines flüssigkeitslöslichen Mediums und einer Flüssigkeit, mit wenigstens zwei Vorratsbehältern zur Bevorratung des Mediums, die mit einer Vorrichtung, die gemäß der Erfindung oder einer ihrer zuvor beschriebenen Weiterbildungen ausgeführt ist. Die erfindungsgemäß gestaltete Anordnung zeichnet sich dadurch aus, dass eine Eingabeeinheit zur Eingabe einer Getränkeauswahl vorgesehen ist, eine Information über den eingegebenen Getränkewunsch an eine Steuereinheit übertragen wird und dass auf der Grundlage eines Steuersignals, das unter Berücksichtigung der Information über den eingegebenen Getränkewunsch von der Steuereinheit erzeugt wird, zumindest ein Stellmittel derart angesteuert wird, dass in Abhängigkeit des Getränkewunsches aus einem der wenigstens zwei Vorratsbehälter eine portionierte Menge des flüssigkeitslöslichen Mediums dem Vormischer zugeführt wird. Die erfindungsgemäße Vorrichtung stellt somit eine Anordnung dar, mit der in Abhängigkeit eines Getränkewunsches aus einer Mehrzahl möglicher zu bereitender Getränke eines ausgewählt und dieses bedarfsgerecht zubereitet wird. Hierbei verfügt die Anordnung bevorzugt über ein Traggestell, in dem wenigstens zwei Vorratsbehälter zur Bevorratung bzw. Bereitstellung des Mediums aufbewahrt werden, und das mit der erfindungsgemäß ausgebildeten Vorrichtung zur Getränkeherstellung bzw. deren Portioniereinheit verbunden ist.

Grundsätzlich ist es denkbar, dass jeder der Vorratsbehälter über eine Portioniereinheit verfügt oder eine zentrale Portioniereinheit vorgesehen ist. Ebenso ist es möglich, jedem Vorratsbehälter einen Vormischer zuzuordnen oder einen Vormischer vorzusehen, in dem in Abhängigkeit des Getränkewunsches das jeweils benötigte Medium mit einem Förderstrom aus Luft, Dampf und/oder Gas gemischt wird.

In jedem Fall ist es wesentlich, dass in Abhängigkeit des vom Nutzer gewählten Getränkewunsches eine portionierte Menge des benötigten Mediums dem Vormischer zugeführt wird, wobei die Förderung des Mediums und zwar sowohl die Entleerung des Zulaufs des Vormischers als auch die Zuführung zur Hauptmischkammer mit Hilfe einer Düseneinheit bewirkt wird, die einen Förderstrom der Luft, Dampf und/oder Gas enthält, zumindest kurzzeitig beschleunigt und eine lokale Druckabsenkung im Bereich des Mediumzulaufes bewirkt.

Auf bevorzugte Weise ist es denkbar, die Bevorratung der Vorratsbehälter an einer ersten Stelle vorzusehen, während die Zubereitung des Getränkes, insbesondere das Mischen des Mediums mit der Flüssigkeit, an einem zweiten, vom ersten entfernten Ort, vorgenommen wird. So ist es beispielsweise denkbar, die Vorratsbehälter im Bereich eines Vorratsraumes vorzusehen, während die Getränkeherstellung, insbesondere das Mischen des Mediums mit der Flüssigkeit an einem anderen Ort, beispielsweise einer Bar, insbesondere einer Bar eines Fitnessstudios, erfolgt. Die räumliche Trennung der Mediumbevorratung ist vor allem dadurch zu erreichen, dass das Medium, mit Hilfe eines kurzzeitig beschleunigten Luftstroms zunächst angesaugt und schließlich mit dem Förderstrom zur Hauptmischkammer geleitet wird. Auf diese Weise sind auch vergleichsweise große Förderstrecken zu überwinden, ohne dass die Gefahr besteht, dass es zu Ablagerungen des Mediums innerhalb des Förderbereiches kommt.

Im Weiteren betrifft die Erfindung eine spezielle Verwendung einer Vorrichtung gemäß der Erfindung oder einer ihrer zuvor beschriebenen Weiterbildungen. Wesentlich für die erfindungsgemäß vorgesehene Verwendung ist, dass ein Fitnessgetränk durch Mischen von Wasser und/oder Milch mit einem als Medium Pulverbeispielsweise einem Protein- bzw. Eiweißpulver und/oder einem Pulver auf Kohlenhydrat-, Creatin- und/oder Aminosäurebasis, erfolgt. Genauso ist es denkbar, dass alternativ oder ergänzend in Abhängigkeit der jeweiligen Kundenwünsche andere flüssigkeitslösliche Medien mit einer Flüssigkeit zur Zubereitung eines speziellen Fitnessgetränks gemischt werden. Die Herstellung des jeweils gewünschten Fitnessgetränkes erfolgt hierbei, indem das in einem Behälter bevorratete Pulver, insbesondere Proteinpulver, mit Milch und/oder Wasser gemischt wird. Auf bevorzugte Weise sind auch hier wiederum eine Steuereinheit und ein Eingabeeinheit vorgesehen, sodass der Nutzer aus mehreren zur Verfügung stehenden Pulversorten, insbesondere aus unterschiedlichen Geschmacksrichtungen, und zwischen Milch und Wasser zum Lösen des Proteinpulvers wählen kann.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Fig. 1:: Perspektivische Schnittdarstellung einer erfindungsgemäß ausgeführten Vorrichtung zur Zubereitung eines Getränks durch Mischen einer Flüssigkeit mit einem flüssigkeitslöslichen Medium;
- Fig. 2:: Schnittdarstellung eines Vormischers,
- Fig. 3:: Schnittdarstellung eines Hauptmischers mit nachgeschaltetem Aufschäumer und Fliehkraftabscheider;
- Fig. 4:: Perspektivische Schnittdarstellung einer Portioniereinheit mit Schraubenförderer;
- Fig. 5:: Perspektivische Schnittdarstellung einer Portioniereinheit mit Flügelrad;
- Fig. 6:: Perspektivische Schnittdarstellung einer Portioniereinheit mit Zahnrad und Rührelement;
- Fig. 7:: Perspektivische Schnittdarstellung einer Portioniereinheit mit Zahnrad und gelenkig gelagertem Rührelement sowie
- Fig. 8:: Schnittdarstellung eines Vorratsbehälters mit angeschlossener Portioniereinheit und Vormischer;
- Fig. 9:: Schematische Darstellung einer Anordnung mit einer Mehrzahl von Vorratsbehältern zur Bevorratung von flüssigkeitslöslichem Medium, die mit einer erfindungsgemäß ausgeführten Vorrichtung zur Zubereitung eines Getränks verbunden sind.

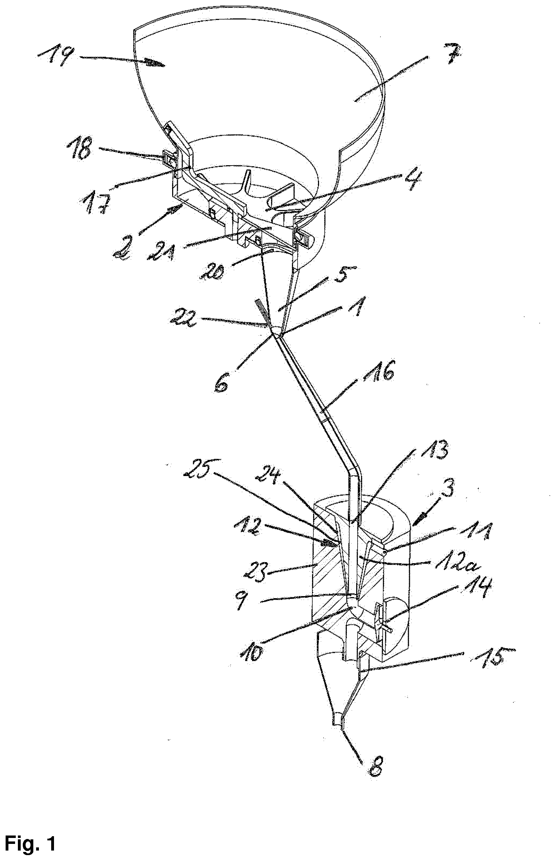

Figur 1 zeigt in einer Schnittdarstellung eine erfindungsgemäß ausgeführte Vorrichtung zur Zubereitung eines Getränkes durch Mischen eines flüssigkeitslöslichen Mediums 19, insbesondere eines Proteinpulvers, mit einer Flüssigkeit, hier Wasser oder Milch. Die gezeigte Vorrichtung zur Herstellung eines Mischgetränkes verfügt insbesondere über eine Portioniereinheit 2, durch die eine definierte Menge des in dem Vorratsbehälter 7 bevorrateten Mediums 19, hier in Form von Proteinpulver, zu einem Zulauf 5 eines Vormischers 1 gefördert wird. Die Portioniereinheit 2 verfügt über eine Fördereinrichtung 4, die als Förderelement ein Zahnrad aufweist. Die einzelnen Zwischenräume zwischen den Zähnen des Zahnrades 4 begrenzen mit dem unteren Boden der Portioniereinheit 2 jeweils einen Förderraum 26, in dem sich in Abhängigkeit der Größe dieses Förderraums 26 eine definierte Menge des Proteinpulvers 19 befindet. Das Zahnrad 4 wird mit Hilfe eines Elektromotors (nicht dargestellt) bedarfsgerecht gedreht, sodass, sofern ein Getränk zubereitet werden soll, eine Öffnung 20 im Boden der Portioniereinheit 2 freigegeben wird, durch die das im Förderraum 26 bevorratete Medium 19 in den Zulauf 5 des Vormischers 1 einströmt. Sobald der Förderraum 26 vollständig entleert ist, endet die Bewegung des Zahnrades 4. Oberhalb der Durchgangsöffnung 20 ist eine Abdeckung 21 in Form einer Blende vorgesehen, die in einem Bereich oberhalb der Durchgangsöffnung 20 den Förderraum 26, also den Bereich, der zwischen zwei Zahnrädern liegt, abdeckt, sodass kein Medium 19 direkt aus dem Vorratsbehälter 7 in den Zulauf 5 des Vormischers 1 einströmen kann. Da nur die zeitweise im Förderraum 26 befindliche Menge des Mediums 19, die ein Volumen einnimmt, das dem von den beiden benachbarten Zahnrädern und der Blende 21 eingeschlossenen Raum entspricht, in den Zulauf 5 des Vormischers 1 abgegeben wird, ist sichergestellt, dass stets nur eine vorgegebene Menge des pulverförmigen Mediums 19 für die Zubereitung eines Getränkes bereitgestellt wird.

Der Vormischer 1 verfügt über einen Einlass 22, durch den ein Luftstrom als Förderstrom in den Vormischer 1 einströmt. Ferner ist im Vormischer 1 eine Düseneinheit 6 in Form einer Venturidüse vorgesehen, die aufgrund einer Verengung des Strömungsquerschnittes den Luftstrom kurzfristig beschleunigt, sodass es in diesem Bereich zu einer Druckabsenkung kommt und das im Zulauf 5 befindliche Medium angesaugt und mit dem Luftstrom mitgerissen wird. Durch die im Anschluss an die Querschnittsverengung der Düse 6 vorgesehene Querschnittserweiterung des Strömungskanals werden eine Reduzierung der Strömungsgeschwindigkeit sowie eine Druckerhöhung bewirkt. Hierdurch wird auf bevorzugte Weise eine gleichmäßige Verteilung des aus dem Zulauf 5 mitgerissenen pulverförmigen Mediums 19 sichergestellt. Der mit pulverförmigem Medium 19, hier mit Proteinpulver beladene Luftstrom wird über die Transportstrecke 16, die als Schlauch- oder Rohrleitung ausgebildet sein kann, zur Hauptmischkammer 3 gefördert.

Die Hauptmischkammer 3 verfügt einerseits über einen Einlass 13 für den mit pulverförmigem Medium 19 beladenen Förderstrom und andererseits über einen Flüssigkeitseinlass 11, durch den wahlweise Wasser oder Milch in die Hauptmischkammer 3 eingebracht werden kann. Über einen im unteren Bereich der Hauptmischkammer 3 vorgesehenen Hauptmischkammerauslass 10 verlässt Flüssigkeit, in der das pulverförmige Medium 19 gelöst ist, die Hauptmischkammer 3.

Ferner ist im Inneren der Hauptmischkammer 3 ein Leitelement 12 vorgesehen, das konisch ausgebildet ist. Das Leitelement 12 ist zweiteilig ausgeführt, wobei ein in Richtung des Mischkammerauslasses 10 konisch zulaufender Ringspalt 25 geschaffen wird, der sich zwischen der Innenwand 24 des Gehäuses 23 und einem innenliegenden Bauelement 12a befindet. Das innenliegende Bauelement 12a ist aus einem Kunststoff gefertigt und in Form eines konischen Einsatzes 12a ausgeführt. Der Außendurchmesser der Einsatzes 12a ist stets kleiner als der Innendurchmesser der Mischkammer in dem gegenüberliegenden Bereich, sodass ein entsprechender Ringspalt 25 realisiert wird. Der als separates Bauelement des Leitelements 12 ausgeführte Einsatz 12a kann der Mischkammer 3, beispielsweise für eine Wartung oder Reinigung, entnommen werden.

Der Einlass 13 der Hauptmischkammer 3 für den mit Pulver 19 beladenen Förderstrom geht in einen Strömungskanal über, der im Inneren des konisch zulaufend ausgeführten Einsatzes verläuft und der an seinem unteren Ende in die Hauptmischkammer 3 mündet. Über diese Mündung 9 wird der Förderstrom mit dem darin befindlichen Medium 19 in die Mischkammer 3 eingedüst und hier mit der im Ringspalt 25 radial strömenden Flüssigkeit gemischt. Bevorzugt ist die von Flüssigkeit überströmte Oberfläche der Mischkammerinnenwand 24 oder der Außenwand des Einsatzes 12a derart konturiert, dass die Flüssigkeitsströmung hierdurch gelenkt und die radiale Strömung in der Hauptmischkammer 3 verstärkt wird. In jedem Fall wird durch das gemäß Figur 1 zweiteilig ausgeführte Leitelement 12 sichergestellt, dass es zu einer radialen Durchströmung der Hauptmischkammer 3 kommt und der mediumbeladene Förderstrom mit der Flüssigkeit gemischt bzw. das Medium 19 in die Flüssigkeitsströmung eingeblasen wird.

Die Flüssigkeit, also Wasser oder Milch, umströmt somit die Hauptmischkammer 3 radial entlang der Innenwand 24 der Hauptmischkammer 3, wobei die Hauptbewegungsrichtung in Richtung des Hauptmischkammerauslasses 10 verläuft. In der Hauptmischkammer 3 wird auf diese Weise eine zirkulierende Flüssigkeitsströmung erzeugt, in die der mit Pulver 19 beladene Luftstrom eingeblasen wird. Aufgrund der radialen Strömung der Flüssigkeit, in die der pulverbeladene Strom eingeleitet wird, kommt es einerseits zu einer vollständigen Mischung bzw. Lösung des pulverförmigen Mediums 19 in der Flüssigkeit und andererseits wird sichergestellt, dass Ablagerungen des pulverförmigen Mediums 19 innerhalb der Hauptmischkammer 3, insbesondere an deren Innenwand 24, zuverlässig vermieden werden.

Zusätzlich zu dem zweiteilig ausgeführten Leitelement 12 kann durch einen Flüssigkeitseinlass 11, der versetzt zu einer quer zur Strömungsrichtung des pulverbeladenen Förderstroms bzw. zu einer Hauptströmungsrichtung der Flüssigkeit verlaufenden Mittellinie angeordnet ist, eine radiale Umströmung der Hauptmischkammer 3 initiiert werden. Auf diese Weise wird sichergestellt, dass der in die Hauptmischkammer 3 eintretende Flüssigkeitsstrom im Wesentlichen tangential auf die Mischkammerinnenwand 24 auftrifft und diese schließlich radial in Richtung auf den Mischkammerauslass 10 überströmt.

Die mit Pulver 19 angereicherte Flüssigkeit, verlässt die Hauptmischkammer 3 im unteren Bereich durch den Hauptmischkammerauslass 10 und strömt anschließend zu einem Aufschäumer 14. Der Aufschäumer 14 wird mit Hilfe eines Elektromotors (nicht dargestellt) bewegt, wobei ein Flügelrad bzw. Drahtringrad derart gedreht wird, dass es zu einem Aufschäumen der pulverbeladenen Flüssigkeit kommt. Die aufgeschäumte Flüssigkeit, bei der es sich um das mit Luft angereicherte Getränk handelt, strömt anschließend in einen konisch ausgebildeten Fliehkraftabscheider 15, in dem zumindest ein Großteil der in dem Getränk enthaltenen Luft abgeschieden wird. Der Fliehkraftabscheider 15 ist derart trichterförmig ausgebildet, dass das Mischgetränk vorzugsweise entlang der Außenwände eines Trichters des Fliehkraftabscheiders 15 nach unten strömt, während zumindest ein Großteil der im Getränk befindlichen Luft nach oben aus dem Fliehkraftabscheider 15 entweichen kann.

Über den Getränkeauslass 8 wird das Getränk schließlich in ein bereitstehendes Gefäß, beispielsweise einen Becher oder ein Glas, ausgegeben.

Durch die Förderung des pulverförmigen Mediums 19, hier Proteinpulver, mit Hilfe eines Luftstroms wird sichergestellt, dass es im gesamten Bereich der Pulverzuführung, nämlich zwischen dem Vorratsbehälter 7 mit der daran befestigten Portioniereinheit 2 und der Hauptmischkammer 3 nicht zu Pulveranlagerungen kommt. Dies ist insbesondere darauf zurückzuführen, dass durch die Düse 6 zum einen innerhalb des Vormischer 1 stromaufwärts der Düse 6 ein Unterdruck erzeugt wird, der eine vollständige Entleerung des Zulaufes 5 des Vormischers 1 sowie eines Bereiches zwischen der Portioniereinheit 2 und dem Vormischer 1 bewirkt, und zum anderen stromabwärts der Düse 6 das pulverförmige Medium 19 vollständig durch den Luftstrom mitgerissen wird. Des Weiteren werden in der Hauptmischkammer 3 Ablagerungen dadurch verhindert, dass das Mischen erfolgt, indem der pulverbeladene Luftstrom in einen rotierenden Flüssigkeitsstrom bzw. einen Flüssigkeitstunnel eingedüst wird. Durch diese Maßnahme wird einerseits eine besonders geeignete Mischung des Pulvers 19 mit der Flüssigkeit erreicht und andererseits werden die Außenbereiche der Hauptmischkammer 3, an denen es zu Ablagerungen kommen könnte, stets von einer Flüssigkeit mit vergleichsweise hoher Geschwindigkeit überströmt.

Der gemäß der speziellen Ausführungsform nach Figur 1 vorgesehene Aufschäumer 14 ist bevorzugt als kompaktes Bauteil ausführt, das, beispielsweise durch eine Steckverbindung, mit dem Flüssigkeitskreislauf zwischen dem Fliehkraftabscheider 15 und der Hauptmischkammer 3 verbunden werden kann. Zur Reinigung oder Wartung kann dieser einfach abgenommen werden, sodass die in diesem Bereich verbleibenden Rohrleitungen leicht zugänglich und somit zu reinigen sind. Gleiches gilt für den sich im unteren Bereich an die Hauptmischkammer 3 bzw. den Aufschäumer 14 anschließenden Fliehkraftabscheider 15. Bereits an dieser Stelle ist ersichtlich, dass es sich insbesondere bei dem Aufschäumer 14, aber auch bei dem Fliehkraftabscheider 15, um spezielle Komponenten handelt, die insbesondere in Abhängigkeit des Kundenwunsches mit dem Getränkezubereitungsautomaten kombiniert werden können.

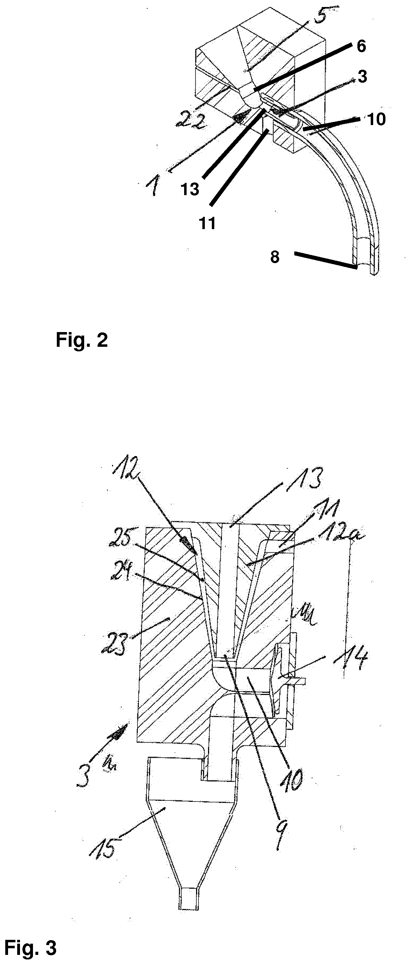

Im Gegensatz zu dem zuvor erläuterten Ausführungsbeispiel zeigt Figur 2 die Kombination eines Vormischers 1 mit einer Hauptmischkammer 3 in einem Bauteil in Schnittansicht. Wesentlich bei der gezeigten speziellen Ausführungsform ist, dass zwischen dem Vormischer 1 und der Hauptmischkammer 3 keine Transportstrecke vorgesehen ist. Vielmehr wird das flüssigkeitslösliche Medium, beispielsweise Proteinpulver, im Vormischer 1 durch den eingedüsten Luft- Dampf- und/oder Gasstrom mitgerissen und unmittelbar im Anschluss daran in der Hauptmischkammer 3 in den von der Flüssigkeitsströmung gebildeten Flüssigkeitstunnel eingedüst. An die Hauptmischkammer 3 schließt sich in diesem Fall unmittelbar der Getränkeauslass 8 an. Bevorzugt erfolgt die Förderung des Mediums 19 mit einem Luftstrom, der mit Hilfe eines Kompressors oder Drucklufterzeugers erzeugt wird. Auf besonders geeignete Weise wird mit einem entsprechenden Kompressor oder Drucklufterzeuger bei einem statischen Druck von 0,1 bis 8 bar (1 • 10⁴ bis 8 • 10⁵ Pa) ein Luftstrom mit einem Volumenstrom von 0,5 bis 13 m³/h gefördert. Ferner haben Versuche gezeigt, dass bei einem statischen Luftdruck von 1 bar (1 • 10⁵ Pa) und einem Volumenstrom des Kompressors von 1,4 bis 1,7 m³/h aufgrund der zusätzlichen Saugleistung der Düse des Vormischers, die das Ansaugen des flüssigkeitslöslichen Mediums sicherstellt, ein zusätzlicher Luftvolumenstrom von 0,9 bis 1,1 m³/h bereitgestellt wird, sodass sich in diesem Fall ein Gesamtvolumenstrom von 2,3 bis 2,8 m³/h am Vormischerauslass ergibt.

Der Vormischer 1 verfügt über einen Zulauf 5, über den aus einer Portioniereinheit 2 kommendes pulverförmiges Medium 19 dem Vormischer 1 zugeleitet wird. Des Weiteren ist ein Einlass 22 vorgesehen, über den Luft als Förderstrom in den Vormischer 1 eingebracht wird. Durch die in Strömungsrichtung stromabwärts des Zulaufes 5 vorgesehene Düseneinheit 6 wird der Luftstrom beschleunigt und in diesem Bereich ein Unterdruck bzw. eine lokale Druckabsenkung erzeugt. Durch den Unterdruck wird das im Zulauf 5 bevorratete Medium19 angesogen und mit dem Luftstrom mitgerissen. Stromabwärts der Engstelle in der Düseneinheit 6 befindet sich eine Erweiterung des Strömungskanals, sodass in diesem Bereich der Druck ansteigt und die Geschwindigkeit des Luftstroms absinkt. Aufgrund dieses abermaligen Drucksprunges kommt es zu einer leichten Wirbelbildung, vor allem im äußeren Umfang des Düsenausgangs und daher zu einer gleichmäßigen Verteilung des im Luftstrom mitgerissenen, pulverförmigen Mediums 19.

Der mit Pulver 19 beladene Luftstrom verlässt schließlich den Bereich des Vormischer 1 und gelangt direkt in die Hauptmischkammer 3. Aufgrund der speziellen Ausführungsform des Vormischers 1 mit seiner Düseneinheit 6 wird sichergestellt, dass der Zulauf 5 vollständig entleert wird und außerdem das mitgerissene Pulver 19 gleichmäßig im Förderstrom verteilt wird. Weiterhin stellt die Förderung des pulverförmigen Mediums 19 mit Hilfe des Förderstroms sicher, dass es nicht zu Ablagerungen des pulverförmigen Mediums an den Innenwänden der Strömungskanäle der erfindungsgemäßen Vorrichtung kommt.

Figur 3 zeigt eine spezielle Ausführung einer für das erfindungsgemäß ausgeführte Gerät zur Zubereitung eines Mischgetränkes vorgesehenen Hauptmischkammer 3. Die Hauptmischkammer 3 verfügt im Wesentlichen über einen Einlass 13 für den mit pulverförmigen Medium beladenen Luftstrom sowie einen Flüssigkeitseinlass 11, durch den je nach Wunsch des Nutzers Milch oder Wasser in die Hauptmischkammer 3 einströmt. Über den Hauptmischkammerauslass 10 strömt die Flüssigkeit, in der das pulverförmige Medium 19 gelöst ist, in Form eines Mischgetränks aus.

Des Weiteren ist im Inneren der Hauptmischkammer 3 ein Leitelement 12 vorgesehen, das im Wesentlichen aus zwei Komponenten besteht, zwischen denen ein Ringspalt 25 zur Strömungsführung gebildet wird. Bei der ersten Komponente des Leitelements handelt es sich um einen konisch ausgeführten Einsatz 12a, der den Einlass 13 für den partikelbeladenen Luftstrom enthält und der sich im inneren der Mischkammer 3 befindet. Die zweite Komponente des Leitelements 12 wird in diesem Fall durch die Innenwand 24 des Gehäuses 23 der Hauptmischkammer 3 gebildet, die in Bezug auf den Einsatz 12a derart konisch mit Übermaß ausgeführt ist, dass zwischen der Außenwand des konisch ausgeführten Einsatzes 12a und der Kammerinnenwand 24 ein Ringspalt 25 gebildet wird. Durch den Ringspalt 25 strömt die Flüssigkeit in radialer Richtung entlang der Gehäuseaußenwand 24, wobei die Hauptströmungsrichtung in Richtung des Hauptmischkammerauslasses 10 verläuft. Im unteren Bereich der Hauptmischkammer 3 erfolgt das Eindüsen des pulverbeladenen Fluidstroms durch eine Mündung 9 in die Mischkammer 3, sodass Pulver 19 entgegen der Strömungsrichtung der Flüssigkeit in den Ringspalt 25 eingeblasen wird. Im Bereich des Ringspaltes 25 kommt es zu einem Mischen und anschließenden Lösen des pulverförmigen Mediums 19 in der Flüssigkeit, wobei durch die Radialströmung innerhalb des Ringspaltes 25 sichergestellt wird, dass Pulverablagerungen in der Hauptmischkammer 3 zuverlässig vermieden werden.

Die Flüssigkeit, hier Milch oder Wasser, in dem das pulverförmige Medium 19, hier Proteinpulver, gelöst wird, strömt über den Hauptmischkammerauslass 10 aus. Wie bereits im Zusammenhang mit Figur 1 erläutert wurde, wird das Mischgetränk im Weiteren mit Hilfe eines Aufschäumers 14 aufgeschäumt und gelangt in einen Fliehkraftabscheider 15, in dem die Flüssigphase zumindest größtenteils von Luft befreit wird. Aus dem Fliehkraftabscheider 15 gelangt das nunmehr fertiggestellte Getränk durch den Getränkeauslass 8 in ein hierfür bereitgestelltes Gefäß.

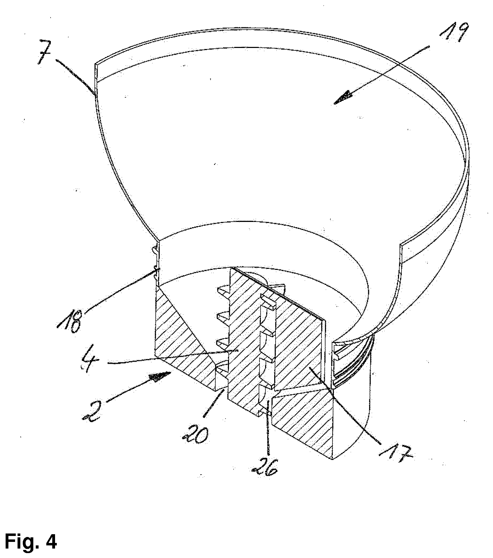

Figur 4 zeigt die perspektivische Ansicht einer speziellen Ausführungsform einer Portioniereinheit 2, wie sie für die erfindungsgemäße Vorrichtung zur Herstellung eines Mischgetränkes verwendet werden kann. Als Fördereinheit 4 verfügt die Portioniereinheit hierbei über eine Förderschnecke bzw. ein Schraubenrad, wobei sich der Auslass 20 der Portioniereinheit 2 mit den Windungen des Schneckenrades 4 derart in Eingriff befindet, dass sofern ein Getränk zubereitet werden soll, wiederum eine vorgegebene Portion des Mediums 19 innerhalb eines Förderraumes 26 zwischen dem Schneckenrad 4 und dem Auslauf 20 der Portioniereinheit 2 eingeschlossen wird, sodass eine genau vorgegebene Menge des benötigten pulverförmigen Mediums 19 von der Portioniereinheit 2 ausgegeben werden kann. Gleichfalls wird hierbei sichergestellt, dass sofern der Portioniervorgang abgeschlossen ist, kein Pulver aus dem Vorratsbehälter 7 über die Portioniereinheit 2, und hier insbesondere über deren Auslauf 20 entweichen kann. Im Weiteren verfügt die Portioniereinheit 2 über ein Rührelement 17, das in den Vorratsbehälter 7 hineinragt und das mit dem Schneckenrad 4 verbunden ist. Sobald sich das Schneckenrad 4 dreht, um pulverförmiges Medium 19 zu transportieren, wird auch das Rührelement 17 in Bewegung versetzt und das im Vorratsbehälter 7 befindliche Medium 19 zumindest im Bereich des Rührelements 17 bewegt. Auf diese Weise wird ein Verklumpen sowie eine Trichterbildung innerhalb des Vorratsbehälters 7 verhindert und so sichergestellt, dass Medium 19 in ausreichender Menge zur Portioniereinheit 2 nachströmt, solange der Vorratsbehälter 7 noch nicht vollständig entleert ist.

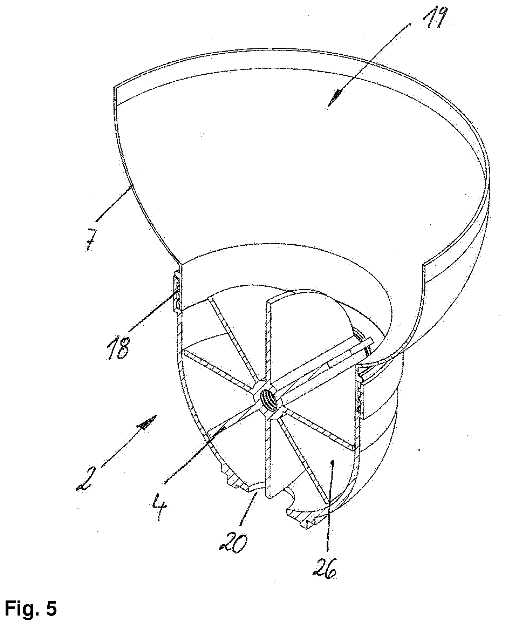

Figur 5 zeigt eine weitere Variante für eine Fördereinrichtung 4, wie sie für eine Portioniereinheit 2 Einsatz finden kann. In diesem Fall wird als Fördereinrichtung 4 ein Flügelrad verwendet, wobei zwischen den einzelnen Flügeln und der Außenwandung der Portioniereinheit 2 ein Förderraum 26 mit definiertem Volumen eingeschlossen wird. Im unteren Bereich der Portioniereinheit 2 ist im Boden eine Durchgangsöffnung 20 vorgesehen, sodass sobald das Flügelrad 4 eine entsprechende Position erreicht, das im Förderraum 16 befindliche Medium 19 durch die Durchgangsöffnung 20 ausströmen und dem Zulauf 5 des Vormischers 1 zugeführt werden kann. Nachdem der Förderraum 26 vollständig entleert ist, dreht das Flügelrad 4 wiederum in eine Position und bleibt in dieser stehen, sodass kein weiteres Medium 19 über die Durchgangsöffnung 20 aus der an dem Vorratsbehälter 7 befestigten Portioniereinheit 2 entweichen kann.

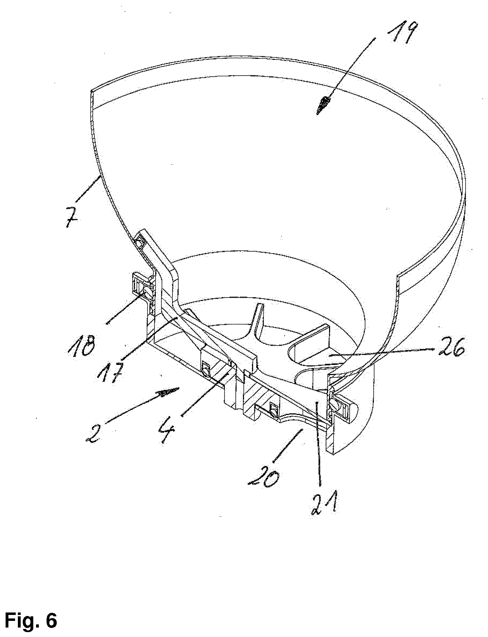

Figur 6 zeigt eine Portioniereinheit 2 mit einer Fördereinrichtung 4, die ein Zahnrad als Förderelement aufweist. Die Funktionalität der Fördereinrichtung 4, entspricht der des im Zusammenhang mit Figur 5 beschriebenen Flügelrades. Auch in diesem Fall ist im Bodenbereich der Portioniereinheit 2 eine Durchgangsöffnung 20 vorgesehen, die bedarfsgerecht freigegeben wird, sodass ein definiertes Volumen eines pulverförmigen Mediums 19, das im Förderraum 26 zwischen den einzelnen Zähnen des Zahnrades 4 und der Wandung der Portioniereinheit 2 eingeschlossen ist, ausströmen kann. Im Bereich der Durchgangsöffnung 20 ist darüber hinaus eine Blende 21 vorgesehen, die bei einer entsprechenden Stellung des Zahnrades den Förderraum 26 nach oben, in Richtung des Vorratsbehälters 7 begrenzt und abschließt, sodass kein Pulver 19 aus dem Vorratsbehälter 7 direkt durch die Durchgangsöffnung 20 aus der Portioniereinheit 2 ausströmen kann. Die Blende 21 stellt somit eine Abdeckung dar, die den zwischen zwei benachbarten Zähnen des Zahnrades 4 liegenden Förderraum 26 dann nach oben in Richtung des Vorratsbehälters 7 abschließt, wenn und solange der Förderraum 26 nach unten über die Durchgangsöffnung 20 geöffnet ist.

Ferner verfügt die in Figur 6 dargestellte Portioniereinheit 2 über ein Rührelement 17, das im oberen Bereich der Portioniereinheit 2 oberhalb der Fördereinrichtung 4 an dieser befestigt ist. Bei einer Bewegung des Zahnrades 4 wird das in Form eines Hebels ausgeführte Rührelement 17 mitgedreht und sorgt dafür, dass es an den Wandungen des Vorratsbehälters 7 weder zu Ablagerungen von Pulver kommt, noch dass es innerhalb des Vorratsbehälters 7 zu einer Klumpen- oder Trichterbildung kommt.

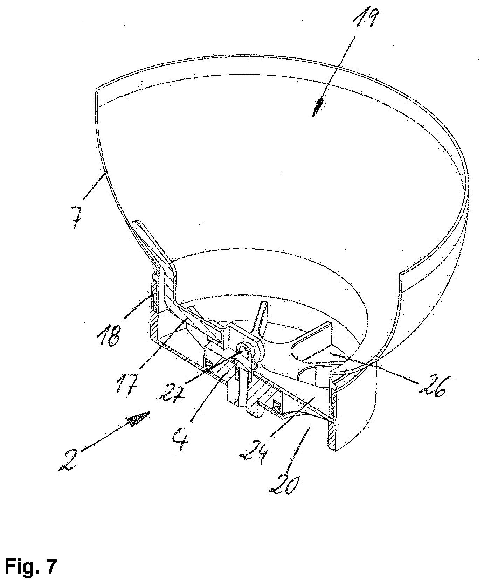

Die Figur 7 zeigt eine Portioniereinheit 2 mit einer Fördereinrichtung 4 mit Zahnrad gemäß der Figur 6, wobei eine spezielle Ausführungsform des Rührelementes 17 dargestellt ist. Wesentlich an dem in Figur 7 dargestellt Rührelement 17 ist, dass dieses über ein Gelenk 27 mit der Portioniereinheit 2 bzw. mit der Fördereinrichtung 4 und insbesondere mit dem Zahnrad verbunden ist. Aufgrund dieser Ausführungsform ist es möglich, das Rührelement 17 hochzuklappen während die Portioniereinheit 2 an einem Vorratsbehälter 7 befestigt wird, um so ein einfaches Einführen des Rührelementes 17 in den Innenraum des Vorratsbehälters 7 zu ermöglichen. Auf diese Weise können auch Rührelemente 17, die über den äußeren Umfang der Portioniereinheit 2 hinausragen, verwendet werden.

Die Befestigung der Portioniereinheit 2 am Vorratsbehälter 7 erfolgt bevorzugt über ein hierfür vorgesehenes Befestigungsmittel 18. In diesem Zusammenhang zeigt Figur 7 die Befestigung der Portioniereinheit 2 am Vorratsbehälter 7 mit Hilfe einer Gewinde- bzw. Schraubverbindung. Die Portioniereinheit 2 kann somit auf einen stehenden Vorratsbehälter 7 aufgeschraubt werden, der daraufhin quasi kopfüber mit einer Vorrichtung zur Zubereitung eines Mischgetränkes verbunden wird. Für die Verbindung der Portioniereinheit 2 mit der Vorrichtung zur Zubereitung eines Mischgetränkes ist wiederum ein geeignetes Anschlusselement vorgesehen, sodass das durch die Portioniereinheit 2 vorportionierte Medium 19 problemlos einem Zulauf 5 des Vormischers 1, beispielsweise über eine Schlauch- oder Rohrleitung, zugeführt werden kann.

Ein Auslaufen von Pulver aus dem Vorratsbehälter 1 wird zuverlässig verhindert, da die Portioniereinheit 2, wie zuvor bereits beschrieben, den Vorratsbehälter 7, sofern keine Portion des pulverförmigen Mediums ausgegeben werden soll, sicher gegen die Umgebung abdichtet.

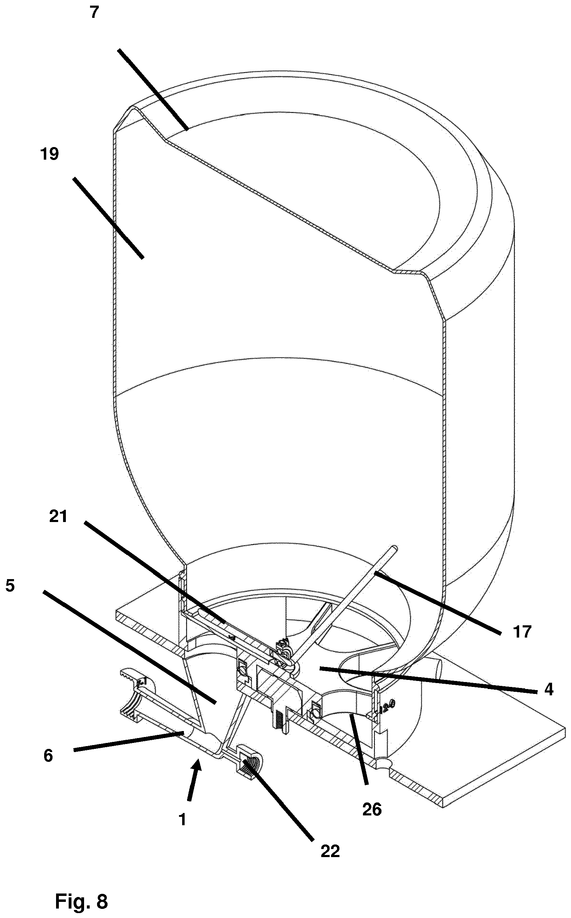

Im Weiteren zeigt Figur 8 eine Schnittansicht eines Vorratsbehälters 7, der mit einer Portioniereinheit 2 und einem Vormischer 1 verbunden ist. Mit Hilfe der gezeigten Anlagenkomponenten ist es möglich, eine definierte Menge des Mediums 19 dem Vorratsbehälter 7 zu entnehmen und über den Vormischer 1 einer weiteren Verwendung, insbesondere der Mischung mit Wasser oder Milch, zuzuführen.

Der Vorratsbehälter 7, in dem ein flüssigkeitslösliches Medium 19, insbesondere in Pulverform, bevorratet wird, ist mit Hilfe eines Schraubgewindes mit der Portioniereinheit 2 verbunden. Wünscht ein Kunde die Zubereitung eines Mischgetränks, wird die hierfür benötigte Menge des flüssigkeitslöslichen Mediums 19 durch die Portioniereinheit 2 in den Zulauf 5 des Vormischers 1 gefördert. Der Vormischer 1 ist an einen Kompressor angeschlossen, der einen Druckluftstrom erzeugt, welcher durch den Förderstromeinlass 22 in den Vormischer 1 gelangt. Nach Eintritt in den Vormischer 1 durchströmt der Druckluftstrom eine Düsenheit 6, wird beschleunigt und saugt durch die hierbei entstehende Druckabsenkung bzw. den entstehenden Unterdruck das im Zulauf 5 des Vormischers 1 befindliche Medium 19 an. Im Weiteren kommt es zu einer intensiven und gleichmäßigen Verteilung des Mediums 19 im Luftstrom.

Die Portioniereinheit 2 verfügt über ein in den Vorratsbehälter 7 hineinragendes Rührelement 17. Dieses ist mit der Fördereinrichtung 4 verbunden, sodass das Rührelement 17 bei einer Bewegung der Fördereinrichtung 4, die hier über ein Zahnrad als Fördermittel verfügt, ebenfalls bewegt wird und so eine Auflockerung des Mediums 19 im Vorratsbehälter 7 bewirkt bzw. ein Verklumpen oder eine Trichterbildung verhindert. Bevorzugt ist das Rührelement 17 hohl und wird zumindest zeitweise von Druckluft durchströmt, was eine weitere Auflockerung des Mediums bewirkt.

Sobald ein Getränk zubereitet werden soll, wird das Zahnrad der Fördereinrichtung 4 gedreht und so schließlich eine vorbestimmte Menge des in einem Förderraum 26 zwischen zwei Zähnen eingeschlossenen Mediums durch eine Durchlassöffnung 20 in den Zulauf 5 des Vormischers 1 gefördert. Oberhalb der Durchlassöffnung 20 verfügt die Portioniereinheit 2 über eine Blende 21, die die Durchgangsöffnung 20 derart überdeckt, dass Medium 19 nicht direkt aus dem Vorratsbehälter in den Zulauf 5 gelangen kann.

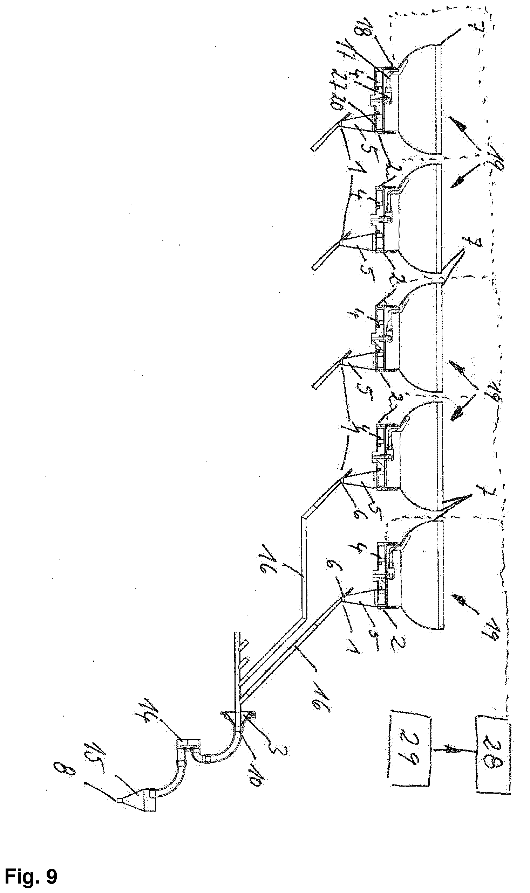

Ferner zeigt Figur 9 eine Anordnung, bei der eine Mehrzahl, verschiedener Vorratsbehälter 7, hier fünf, mit einer Vorrichtung zur Zubereitung eines Mischgetränkes, die erfindungsgemäß ausgeführt ist, verbunden sind. In den Vorratsbehältern 7 können Pulver 19, die beispielsweise eine unterschiedliche Geschmacksrichtung aufweisen, bevorratet werden. Die Vorratsbehälter 7 sind jeweils mit einer Portioniereinheit 2 und einem Vormischer 1 verbunden. Sobald ein Getränkewunsch von einem Nutzer über eine Eingabeeinheit eingegeben wird, wird eine Portion des hierfür benötigten Mediums 19 aus der entsprechenden Portioniereinheit 2 ausgegeben und im jeweiligen Vormischer 1 mit einem Luftstrom gemischt. Die Mischung des Luftstroms mit dem Pulver 19 im Vormischer 1 erfolgt wiederum unter Verwendung einer Düseneinheit 6, die einerseits eine kurzfristige Geschwindigkeitserhöhung des Luftstroms und andererseits eine damit verbundene Druckreduzierung bewirkt.

Das mit dem Luftstrom geförderte Medium 19, insbesondere pulverförmiges Medium, gelangt über eine Rohr- oder Schlauchleitung 16 und entsprechend hierfür vorgesehene Anschlussstücke zu einer Hauptmischkammer 3, in der der pulverbeladene Luftstrom mit einer Flüssigkeit gemischt wird, die im Bereich der Hauptmischkammer 3 eine Radialströmung bzw. Tunnelströmung ausführt. Die Flüssigkeit, in der das Pulver 19 gelöst ist, gelangt schließlich bevorzugt über einen Aufschäumer 14 sowie einen Fliehkraftabscheider 15 zu einem Getränkeauslass 8, über den das gewünschte Getränk in ein Gefäß, insbesondere einen Becher oder ein Glas, ausgegeben wird.

Die in Figur 9 dargestellte Ausführungsform macht deutlich, dass eine Bevorratung des flüssigkeitslöslichen Mediums 19 auf bevorzugte Weise an einem anderen Ort als die Mischung des Mediums 19 mit der Flüssigkeit erfolgen kann. Aufgrund der Luftförderung wird sichergestellt, dass der pulverbeladene Luftstrom auch über vergleichsweise lange Förderstrecken geleitet werden kann, ohne dass es im Bereich der hierfür vorgesehenen Schlauch- oder Rohrleitungen 16 zu Ablagerungen des Pulvers 19 kommt. Innerhalb der Hauptmischkammer 3 werden Feststoffablagerungen vor allem dadurch verhindert, dass die Hauptmischkammer 3 an ihrer Innenwand 24 vollflächig überströmt wird und das Pulver 19 vollständig in Lösung geht.

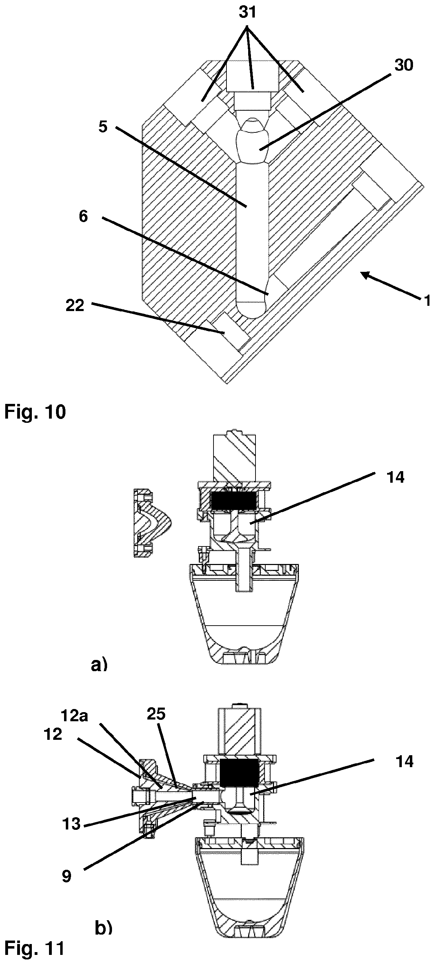

In Figur 10 ist in einer Schnittdarstellung eine spezielle Ausführungsform der Erfindung dargestellt, bei der an den Zulauf 5, über den ein pulverförmiges Medium in den Vormischer 1 gelangt, drei Vorratsbehälter angeschlossen sind. Der Vorlauf 5 stromaufwärts über einen Sammler 30, an den drei, zu unterschiedlichen Vorrastbehältern führende Leitungen 31, bevorzugt in Form von Schläuchen, angeschlossen sind. In den drei Vorratsbehälter werden jeweils unterschiedliche Medien, die unterschiedliche Eigenschaften aufweisen, bevorratet, sodass nach Mischung mit dem Fluid im Hauptmischer unterschiedliche Getränke, insbesondere Getränke mit unterschiedlichem Geschmack, bereitgestellt werden können. Die Anzahl der Anschlüsse bzw. angeschlossenen Vorratsbehälter ist in Abhängigkeit des jeweiligen Bedarfs skalierbar, sodass jeweils auch mehr oder weniger als drei unterschiedliche Mischgetränke herstellbar sind.

Nach Auswahl des Wunschgetränkes durch den Nutzer wird die Portioniereinheit des entsprechenden Vorratsbehälters aktiviert und es gelangt eine Portion des für die Herstellung des Wunschgetränkes benötigten Pulvers über eine Leitung 31 und den Sammler 30 in den Zulauf 5 des Vormischers 1. Der Vormischer 1 verfügt wiederum über eine Düseneinheit 6, die von einem aus der Fluidzuführung 22 kommenden Luft- oder Gasstrom durchströmt wird, wobei ein Unterdruck erzeugt und das im Zulauf 5 befindliche pulverförmige Medium aus dem Zulauf 5 mitgerissen und gleichmäßig in dem Luft- oder Gasstrom verteilt wird. Der so erzeugte Luft- oder Gasstrom mit darin gefördertem pulverförmigen Medium wird dem Hauptmischer 3 zugeführt. Wesentlich an der beschriebenen Ausführungsform ist, dass mehrere, hier drei, Vorratsbehälter über einen Sammler 30 mit dem Zulauf 5 des Vormischers 1 verbunden sind.

Figur 11 zeigt in zwei Schnittdarstellungen a), b), die in zwei planparallelen Ebenen angeordnet sind, den Hauptmischer 3 einer erfindungsgemäß ausgeführten Vorrichtung zur Herstellung eines Getränks durch Mischen eines pulverförmigen Mediums mit einem Fluid, insbesondere mit Wasser oder Milch. Dem Hauptmischer 3 wird einerseits über einen Mediumeinlass 13 der Luft- oder Gasstrom mit dem darin enthaltenen pulverförmigen Medium und andererseits über einen Flüssigkeitseinlass 11 eine Flüssigkeit, insbesondere Wasser oder Milch, zugeführt. Stromabwärts des Flüssigkeitseinlasses 11 ist als Leitelement 12 eine konusartige Kammer mit einem darin angeordneten ebenfalls konusartigen Leitelement 12a vorgesehen, sodass ein Spalt zur Führung der Flüssigkeit gebildet wird, in dem die Flüssigkeit in eine spiralförmige Strömung versetzt wird. Im Bereich der Förderstrommündung 9 findet eine Mischung des pulverförmigen Mediums mit der Flüssigkeit statt, wobei beide Fluidströme in die Hauptmischkammer gelangen. Durch die spiralförmige Strömung und die mittige Eindüsung des Förderstroms mit dem pulverförmigen Medium wird eine intensive Mischung dieser Komponenten erreicht. Ferner sind die Förderstrommündung 9 und der Auslass des konusartigen Förderelementes 12 derart angeordnet, dass die Fluidströme schließlich außermittig in die Hauptmischkammer eingeleitet werden. Diese nicht rotationssymmetrische Ausführung der Hauptmischkammer mit der Förderstrommündung ist den beiden Schnittdarstellungen zu entnehmen, die in unterschiedlichen, parallelen Ebenen vorgesehene Schnitte zeigen.

Dies nicht rotationssymmetrische Ausführung wird dadurch erreicht, dass die Förderstrommündung 9 mit dem Auslass des konusartigen Leitelements 12 bzw. ein Rohrstück, in das der sich spiralförmig fortbewegende Flüssigkeitsstrom und der Förderstrom mit dem pulverförmigen Medium aus der Förderstrommündung und dem konusartigen Spalt des Leitelements 12 gelangen, tangential zur Hauptmischkammer angeordnet sind. Auf diese Weise wird wiederum sichergestellt, dass die Strömung innerhalb der Hauptmischkammer in eine Rotation versetzt wird, sodass eine besonders gute Mischung des pulverförmigen Mediums mit der Flüssigkeit erzielt wird. Innerhalb des Hauptmischers findet eine intensive Mischung der Komponenten bei gleichzeitigem Aufschäumen statt.

### Bezugszeichenliste

- 1: Vormischer
- 2: Portioniereinheit
- 3: Hauptmischer
- 4: Fördereinreichtung
- 5: Zulauf
- 6: Düseneinheit
- 7: Vorratsbehälter
- 8: Getränkeauslass
- 9: Förderstrommündung im Hauptmischer
- 10: Hauptmischkammerauslass
- 11: Flüssigkeitseinlass am Hauptmischer
- 12: Leitelement
12a Einsatz
- 13: Mediumeinlass am Hauptmischer
- 14: Aufschäumer
- 15: Fliehkraftabscheider
- 16: Transportstrecke
- 17: Rührelement
- 18: Befestigungsmittel
- 19: Medium
- 20: Durchlassöffnung
- 21: Blende
- 22: Förderstromeinlass am Vormischer
- 23: Gehäusewand des Hauptmischers
- 24: Innenwand der Hauptmischkammer
- 25: Ringspalt
- 26: Förderraum
- 27: Gelenk
- 28: Steuereinheit
- 29: Eingabeeinheit
- 30: Sammler
- 31: Leitung vom Vorratsbehälter

## Patentansprüche

1. Vorrichtung zur Herstellung eines Getränkes durch Mischen eines flüssigkeitslöslichen Mediums (19) und einer Flüssigkeit, mit einer Portioniereinheit (2), die mit einem Vorratsbehälter (7) zur Lagerung des Mediums (19) verbunden ist und die einem Vormischer (1) eine portionierte Menge des flüssigkeitslöslichen Mediums (19) aus dem Vorratsbehälter (7) zuführt, wobei das Medium (19) im Vormischer (1) mit Luft, Dampf und/oder einem Gas gemischt und mit einem Luft-, Dampf- und/oder Gasstrom zu einer Hauptmischkammer (3) transportiert wird, in der das Medium (19) mit der Flüssigkeit gemischt wird, und mit einem Getränkeauslass (8), über den das aus der Flüssigkeit und dem flüssigkeitslöslichen Medium (19) hergestellte Getränk ausgegeben wird,
**dadurch gekennzeichnet, dass** der Vormischer (1) einen Einlass (22) für den Luft-, Dampf- und/oder Gasstrom und eine in Strömungsrichtung dem Einlass (22) nachgeschaltete Düseneinheit (6) aufweist, über die der Luft-, Dampf- und/oder Gasstrom wenigstens zeitweise beschleunigt und derart durch den Vormischer (1) geleitet wird, dass die Portion des Mediums (19) durch den Luft-, Dampf- und/oder Gasstrom aus einem Zulauf (5) mitgerissen und das Medium (19) mit dem Luft-, Dampf- und/oder Gasstrom zur Hauptmischkammer (3) gefördert wird.

2. Vorrichtung nach Anspruch 1,
**dadurch gekennzeichnet, dass** die Düseneinheit (6) eine Venturidüse aufweist.

3. Vorrichtung nach Anspruch 1 oder 2,
**dadurch gekennzeichnet, dass** zwischen dem Vormischer (1) und der Hauptmischkammer (3) eine Transportstrecke (16) vorgesehen ist.

4. Vorrichtung nach einem der Ansprüche 1 bis 3,
**dadurch gekennzeichnet, dass** der Vormischer (1) und die Hauptmischkammer (3) in einem Bauteil integriert sind.

5. Vorrichtung nach einem der Ansprüche 1 bis 4,
**dadurch gekennzeichnet, dass** die Hauptmischkammer (3) über einen Flüssigkeitseinlass (11), durch den ein Flüssigkeitsstrom der Flüssigkeit einströmt, über einen Mediumeinlass (13), durch den der mediumbeladene Luft-, Dampf- und/oder Gasstrom einströmt, und über einen Hauptmischkammerauslass (10), durch den die mit dem flüssigkeitslöslichen Medium (19) angereicherte Flüssigkeit ausströmt, verfügt, und dass wenigstens ein Leitelement (12) vorgesehen ist, auf das der Flüssigkeitsstrom wenigstens teilweise auftrifft und derart umgelenkt wird, dass der Flüssigkeitsstrom auf einer Strecke zwischen dem Flüssigkeitseinlass (11) und dem Hauptmischkammerauslass (10) wenigstens teilweise eine radiale Strömungsform annimmt.

6. Vorrichtung nach Anspruch 5,
**dadurch gekennzeichnet, dass** das Leitelement (12) ein wenigstens abschnittsweise zylinderförmig, konisch und/oder schraubenförmig ausgebildetes Objekt aufweist, über dessen Oberfläche die Flüssigkeit wenigstens teilweise strömt.

7. Vorrichtung nach Anspruch 5 oder 6,
**dadurch gekennzeichnet, dass** das Leitelement (12) wenigstens teilweise durch eine Innenwand (24) der Hauptmischkammer (3) gebildet wird.

8. Vorrichtung nach einem der Ansprüche 1 bis 7,
**dadurch gekennzeichnet, dass** die Portioniereinheit (2) eine Fördereinheit (4) mit einem Propeller, einem Zahnrad, einem Flügelrad und/oder einer Förderschnecke aufweist.

9. Vorrichtung nach Anspruch 8,
**dadurch gekennzeichnet, dass** die Portioniereinheit (2) über eine Portionierhilfe (21) verfügt, die in einer ersten Betriebssituation derart mit der Fördereinheit (4) zusammenwirkt, dass wenigstens zeitweise zumindest eine Portion mit vorgegebener Menge des aus dem Vorratsbehälter (7) entnommenen Mediums (19) zwischen Fördereinheit (4) und Portionierhilfe (21) in einem Förderraum (26) eingeschlossen ist, und in einer zweiten Betriebssituation die Portion mit vorgegebener Menge des Mediums (19) aus dem Förderraum (26) in den Zulauf (5) des Vormischers (1) geleitet wird.

10. Vorrichtung nach Anspruch 9,
**dadurch gekennzeichnet, dass** die Portionierhilfe (21) in Form einer Blende ausgeführt ist, die einer Durchgangsöffnung (20), die in der zweiten Betriebssituation einen Durchlass vom Förderraum (26) zum Zulauf (5) des Vormischers (1) freigibt, gegenüberliegend angeordnet ist und die Durchgangsöffnung (20) wenigstens in der zweiten Betriebssituation überdeckt.

11. Vorrichtung nach einem der Ansprüche 1 bis 10,
**dadurch gekennzeichnet, dass** die Portioniereinheit (2) ein Befestigungsmittel (18) aufweist, mit dem eine zerstörungsfrei lösbare Verbindung zwischen dem Vorratsbehälter (7) und der Portioniereinheit (2) herstellbar ist.

12. Vorrichtung nach einem der Ansprüche 1 bis 11,
**dadurch gekennzeichnet, dass** die Portioniereinheit (2) ein bewegbar angeordnetes Rührelement (17) aufweist, das in montiertem Zustand des Vorratsbehälters (7) auf einer dem Vorratsbehälter (7) zugewandten Seite der Portioniereinheit (2) das Medium (19) berührt.

13. Vorrichtung nach einem der Ansprüche 1 bis 12,
**dadurch gekennzeichnet, dass** in Strömungsrichtung zwischen der Hauptmischkammer (3) und dem Auslass (8), über den das Getränk ausgegeben wird, ein Element zur Temperierung vorgesehen ist, um die Flüssigkeit und/oder die Flüssigkeit mit wenigstens teilweise darin befindlichem Medium (19) zumindest zeitweise zu erwärmen oder zu kühlen, ein Aufschäumer (14) und/oder ein Abscheider (15) für Luft, Gas und/oder Dampf vorgesehen ist.

14. Anordnung zur Erzeugung von Getränken durch Mischen eines flüssigkeitslöslichen Mediums (19) und einer Flüssigkeit, mit wenigstens zwei Vorratsbehältern (7) zur Bevorratung des Mediums (19) und mit einer Vorrichtung gemäß wenigstens einem der vorangehenden Ansprüche,
**dadurch gekennzeichnet, dass** eine Eingabeeinheit (29) zur Eingabe einer Getränkeauswahl vorgesehen ist, eine Information über den eingegebenen Getränkewunsch an eine Steuereinheit (28) übertragen wird und auf der Grundlage eines Steuersignals, das unter Berücksichtigung der Information über den eingegebenen Getränkewunsch von der Steuereinheit (28) erzeugt wird, zumindest ein Stellmittel derart angesteuert wird, dass in Abhängigkeit des Getränkewunsches aus einem der wenigstens zwei Vorratsbehälter (7) eine portionierte Menge des flüssigkeitslöslichen Mediums (19) dem Vormischer (1) zugeführt wird.

15. Verwendung einer Vorrichtung nach wenigstens einem der Ansprüche 1 bis 13 oder einer Anordnung nach Anspruch 14 zur Herstellung eines Fitnessgetränks durch Mischen von Wasser und/oder Milch mit einem Protein enthaltenden, pulverförmigen sowie milch- und/oder wasserlöslichen Medium (19).

## Claims

1. An apparatus for producing a beverage by mixing a liquid-soluble medium (19) and a liquid, having a portioning unit (2) connected to a storage container (7) for storing the medium (19) and supplying a portioned amount of the liquid-soluble medium (19) from the storage container (7) to a pre-mixer (1), wherein the medium (19) is mixed with air, steam and/or a gas in the pre-mixer (1) and transported to a main mixing chamber (3) with an air, steam and/or gas flow, in which chamber the medium (19) is mixed with the liquid, and a beverage outlet (8), via which the beverage produced from the liquid and the liquid-soluble medium (19) is output,
**characterized in that** the pre-mixer (1) has an inlet (22) for the air, steam and/or gas flow and a nozzle unit (6) downstream of the inlet (22) in the flow direction, via which the air, steam and/or gas flow is accelerated at least at times and passed through the pre-mixer (1) such that the portion of the medium (19) is entrained from an intake (5) by the air, steam and/or gas flow and the medium (19) is transported to the main mixing chamber (3) with the air, steam and/or gas flow.

2. The apparatus according to claim 1,
**characterized in that** the nozzle unit (6) has a Venturi nozzle.

3. The apparatus according to claim 1 or 2,
**characterized in that** a transport route (16) is provided between the pre-mixer (1) and the main mixing chamber (3).

4. The apparatus according to any one of claims 1 to 3,
**characterized in that** the pre-mixer (1) and the main mixing chamber (3) are integrated in one component.

5. The apparatus according to any one of claims 1 to 4,
**characterized in that** the main mixing chamber (3) has a liquid inlet (11), through which a liquid flow of the liquid flows in, a medium inlet (13), through which the medium-laden air, steam and/or gas flow flows in, and a main mixing chamber outlet (10), through which the liquid enriched with the liquid-soluble medium (19) flows out, and that at least one guide element (12) is provided, onto which the liquid flow impinges at least in part and is diverted such that the liquid flow assumes a radial flow pattern, at least in part, on a route between the liquid inlet (11) and the main mixing chamber outlet (10).

6. The apparatus according to claim 5,
**characterized in that** the guide element (12) has a cylindrically, conically and/or helically shaped object, at least in sections, across the surface of which the liquid flows at least in part.

7. The apparatus according to claim 5 or 6,
**characterized in that** the guide element (12) is formed, at least in part, by an inner wall (24) of the main mixing chamber (3).

8. The apparatus according to any one of claims 1 to 7,
**characterized in that** the portioning unit (2) has a conveying unit (4) with a propeller, a gear, an impeller and/or a screw conveyor.

9. The apparatus according to claim 8,
**characterized in that** the portioning unit (2) has a portioning aid (21), which, in a first operating situation, interacts with the conveying unit (4) such that, at least at times, at least a portion with a predetermined amount of the medium (19) retrieved from the storage container (7) is enclosed in a conveying space (26) between the conveying unit (4) and the portioning aid (21), and, in a second operating situation, the portion with a predetermined amount of the medium (19) is guided from the conveying space (26) into the intake (5) of the pre-mixer (1).

10. The apparatus according to claim 9,
**characterized in that** the portioning aid (21) is designed in the form of a screen arranged opposite a passage opening (20), which, in the second operating situation, releases a passage from the conveying space (26) to the intake (5) of the pre-mixer (1), and covers the passage opening (20) at least in the second operating situation.

11. The apparatus according to any one of claims 1 to 10,
**characterized in that** the portioning unit (2) has a fastening means (18), using which a non-destructively releasable connection between the storage container (7) and the portioning unit (2) can be established.

12. The apparatus according to any one of claims 1 to 11,
**characterized in that** the portioning unit (2) has a movably arranged stirring element (17), that in the mounted state of the storage container (7) touches the medium (19) on a side of the portioning unit (2) facing the storage container (7).

13. The apparatus according to any one of claims 1 to 12,
**characterized in that**, in the flow direction between the main mixing chamber (3) and the outlet (8), via which the beverage is output, an element for temperature control for heating or cooling, at least at times, the liquid and/or the liquid including, at least in part, the medium (19) therein, a frother (14) and/or a separator (15) for air, gas and/or steam are provided.

14. An arrangement for producing beverages by mixing a liquid-soluble medium (19) and a liquid, with at least two storage containers (7) for storing the medium (19) and with an apparatus according to at least one of the preceding claims,
**characterized in that** an input unit (29) for inputting a beverage selection is provided, an information about the input beverage choice is transmitted to a control unit (28), and, based on a control signal generated by the control unit (28) considering the information about the input beverage choice, at least one actuating means is controlled such that, depending on the beverage choice, a portioned amount of the liquid-soluble medium (19) from one of the at least two storage containers (7) is supplied to the pre-mixer (1).

15. Use of an apparatus according to at least one of claims 1 to 13 or an arrangement according to claim 14 for producing a fitness beverage by mixing water and/or milk with a protein-containing, powdery as well as milk- and/or water-soluble medium (19).

## Revendications

1. Dispositif pour la préparation d'une boisson par mélange d'un milieu (19) soluble dans un liquide, et d'un liquide, comportant une unité portionneuse (2) qui est reliée à un réservoir (7) pour le stockage dudit milieu (19) et qui alimente un pré-mélangeur (1) avec une quantité portionnée dudit milieu (19) soluble dans un liquide provenant dudit réservoir (7), ledit milieu (19) étant mélangé, dans ledit pré-mélangeur (1), avec de l'air, de la vapeur et/ou un gaz et transporté avec un flux d'air, de vapeur et/ou de gaz vers une chambre de mélange principale (3) dans laquelle ledit milieu (19) est mélangé avec le liquide, et comportant une sortie de boisson (8) par laquelle est distribuée la boisson produite à partir du liquide et dudit milieu (19) soluble dans le liquide,
**caractérisé en ce que** ledit pré-mélangeur (1) présente une entrée (22) pour ledit flux d'air, de vapeur et/ou de gaz et une unité de buse (6) qui est montée en aval de ladite entrée (22) dans le sens de l'écoulement et par laquelle ledit flux d'air, de vapeur et/ou de gaz est accéléré du moins temporairement et est conduit à travers ledit pré-mélangeur (1) de telle manière que la portion dudit milieu (19) soit entraînée par ledit flux d'air, de vapeur et/ou de gaz provenant d'une arrivée (5) et que ledit milieu (19) soit transporté vers ladite chambre de mélange principale (3) avec ledit flux d'air, de vapeur et/ou de gaz.

2. Dispositif selon la revendication 1,
**caractérisé en ce que** ladite unité de buse (6) comprend un tube de Venturi.

3. Dispositif selon la revendication 1 ou 2,
**caractérisé en ce qu'**une section de transport (16) est prévue entre ledit pré-mélangeur (1) et ladite chambre de mélange principale (3).

4. Dispositif selon l'une des revendications 1 à 3,
**caractérisé en ce que** ledit pré-mélangeur (1) et ladite chambre de mélange principale (3) sont intégrés dans une seule pièce.

5. Dispositif selon l'une des revendications 1 à 4,
**caractérisé en ce que** ladite chambre de mélange principale (3) dispose une entrée de liquide (11), par laquelle entre un flux de liquide, une entrée de milieu (13), par laquelle entre ledit flux d'air, de vapeur et/ou de gaz chargé de milieu, et une sortie de chambre de mélange principale (10), par laquelle s'écoule le liquide enrichi en milieu (19) soluble dans le liquide, et **en ce qu'**il est prévu au moins un élément de guidage (12) sur lequel le flux de liquide arrive du moins partiellement et est dévié de telle manière que ledit flux de liquide prenne du moins partiellement une forme d'écoulement radiale sur une section entre ladite entrée de liquide (11) et ladite sortie de chambre de mélange principale (10).

6. Dispositif selon la revendication 5,
**caractérisé en ce que** ledit élément de guidage (12) comprend un objet qui est de forme cylindrique, conique et/ou hélicoïdale du moins par sections et sur la surface duquel le liquide s'écoule du moins partiellement.

7. Dispositif selon la revendication 5 ou 6,
**caractérisé en ce que** ledit élément de guidage (12) est formé du moins partiellement par une paroi intérieure (24) de ladite chambre de mélange principale (3).

8. Dispositif selon l'une des revendications 1 à 7,
**caractérisé en ce que** ladite unité portionneuse (2) comprend une unité de transport (4) avec une hélice, une roue d'engrenage, une roue à aubes et/ou un transporteur à vis.

9. Dispositif selon la revendication 8,
**caractérisé en ce que** ladite unité portionneuse (2) comprend une aide au portionnement (21) qui, dans une première situation de fonctionnement, coopère avec ladite unité de transport (4) de telle manière à ce qu'au moins une portion avec une quantité prédéterminée dudit milieu (19) prélevé dudit réservoir (7) soit du moins temporairement enfermée entre ladite unité de transport (4) et ladite aide au portionnement (21) dans une chambre de transfert (26), et que, dans une deuxième situation de fonctionnement, ladite portion avec une quantité prédéterminée dudit milieu (19) est transportée de ladite chambre de transfert (26) dans ladite arrivée (5) dudit pré-mélangeur (1).

10. Dispositif selon la revendication 9,
**caractérisé en ce que** ladite aide au portionnement (21) est réalisée sous la forme d'un diaphragme qui est opposé à un orifice de passage (20), qui, dans la deuxième situation de fonctionnement, ouvre un passage de ladite chambre de transfert (26) vers ladite arrivée (5) dudit pré-mélangeur (1), et qui recouvre ledit orifice de passage (20) au moins dans la deuxième situation de fonctionnement.

11. Dispositif selon l'une des revendications 1 à 10,
**caractérisé en ce que** ladite unité portionneuse (2) présente un moyen de fixation (18) avec lequel une liaison amovible non destructive peut être réalisée entre ledit réservoir de stockage (7) et ladite unité portionneuse (2).

12. Dispositif selon l'une des revendications 1 à 11,
**caractérisé en ce que** ladite unité portionneuse (2) présente un élément d'agitation (17) disposé de manière mobile et qui, lorsque ledit réservoir de stockage (7) est monté, touche ledit milieu (19) sur un côté de l'unité portionneuse (2) tourné vers ledit réservoir de stockage (7).

13. Dispositif selon l'une des revendications 1 à 12,
**caractérisé en ce que**, dans la direction d'écoulement entre ladite chambre de mélange principale (3) et ladite sortie (8) par laquelle la boisson est distribuée, un élément thermorégulateur est prévu pour chauffer ou refroidir du moins temporairement le liquide et/ou le liquide contenant ledit milieu (19) au moins partiellement, un mousseur (14) et/ou un séparateur (15) pour l'air, le gaz et/ou la vapeur sont prévus.

14. Agencement pour la préparation de boissons par mélange d'un milieu (19) soluble dans un liquide, et d'un liquide, comportant au moins deux réservoirs de stockage (7) pour le stockage dudit milieu (19) et un dispositif selon au moins l'une des revendications précédentes,
**caractérisé en ce qu'**il est prévu une unité d'entrée (29) pour l'entrée d'une sélection de boisson, qu'une information concernant la demande de boisson entrée est transmise à une unité de commande (28) et que, sur la base d'un signal de contrôle qui est produit par ladite unité de commande (28) en tenant compte de l'information concernant la demande de boisson entrée, du moins un moyen de réglage est piloté de telle sorte que, en fonction de la demande de boisson, une quantité portionnée dudit milieu (19) soluble dans un liquide soit amenée audit pré-mélangeur (1) à partir d'au moins un des deux réservoirs de stockage (7).

15. Utilisation d'un dispositif selon au moins l'une des revendications 1 à 13 ou d'un agencement selon la revendication 14 pour la préparation d'une boisson de remise en forme en mélangeant de l'eau et/ou du lait avec dudit milieu (19) poudreux et soluble dans du lait ou dans de l'eau et contenant des protéines.
